# EUROPÄISCHE PATENTSCHRIFT

(11) **EP 3 149 383 B1**
(45) Veröffentlichungstag und Bekanntmachung des Hinweises auf die Patenterteilung: **02.08.2023**
(21) Anmeldenummer: 15726599.2
(22) Anmeldetag: 01.06.2015
(51) Int. Cl.: F16L 37/098

(54) **STECKVERBINDER FÜR FLUIDLEITUNGEN MIT INNENLIEGENDER ADAPTERHÜLSE**
PLUG CONNECTOR FOR FLUID LINES, COMPRISING AN INNER ADAPTER SLEEVE
RACCORD ENFICHABLE POUR CONDUITES DE FLUIDE, MUNI D'UNE DOUILLE D'ADAPTATION INTÉRIEURE

(30) Priorität: 30.05.2014 DE 102014107655; 01.04.2015 WO PCT/EP2015/057243
(43) Veröffentlichungstag der Anmeldung: 05.04.2017
(73) Patentinhaber: Voss Automotive GmbH, 51688 Wipperfürth (DE)
(72) Erfinder: KLEIN, Roland, 51688 Wipperfürth (DE); HEINRICHS, Eugen, 51702 Bergneustadt (DE)
(74) Vertreter: Dr. Solf & Zapf Patent- und Rechtsanwalts PartG mbB
(86) Internationale Anmeldenummer: PCT/EP2015/062178
(87) Internationale Veröffentlichungsnummer: WO 2015/181396

(56) Entgegenhaltungen:
- DE-A1-102005 060 135
- DE-A1-102011 084 988
- US-A1- 2012 326 436

## Beschreibung

Die vorliegende Erfindung betrifft einen Steckverbinder gemäß dem Oberbegriff des Anspruchs 1.

Ein Steckverbinder des Stands der Technik ist aus der DE 10 2011 084 988 bekannt.

Hierbei sind die Formschlussmittel am freien Ende der Rastarme an deren Außenseite ausgebildet. Die Rastnocken sind ebenfalls an diesen Rastarmen an deren Unterseite angeordnet, wobei sich die Rastnocken innerhalb des Muffenabschnitts befinden. Diese Anordnung und Ausbildung der Formschlusselemente und der Rastnocken bedingen einerseits eine relativ lange Bauweise des Muffenabschnitts und darüber hinaus befindet sich in der Wandung des Muffenabschnitts ein relativ großer Ausschnitt, so dass die Rastarme ungeschützt sind und darüber hinaus auch Schmutz leicht in den Muffenabschnitt eindringen kann. Zudem weist die aus dieser Druckschrift bekannte Verbindungseinheit aus Steckverbinder und Gegensteckverbinder zusätzliche Halteelemente auf, um eine Verdrehsicherung zu gewährleisten.

Aus der DE 10 2005 0601 35 A1 ist eine weitere Steckkupplung bekannt. Diese weist ein Aufnahmeteil und ein Sicherungsteil auf. Mittels eines Hinterraststücks des Sicherungsteils ist ein Einsteckteil mit dem Aufnahmeteil verbindbar. Das Sicherungsteil weist eine Ringhülse auf, an der über jeweils einen Federsteg die Hinterraststücke und ein Blockierstück angesetzt sind. Die Blockierstücke sind nach Einfügen des Einsteckteiles durch das Einsteckteil radial nach innen so blockiert, dass es mit einer Anschlagwand einer Widerlagerwand gegenüberliegt. Dabei ist jedes Hinterraststück einer Abdeckwand bedeckt, so dass ein Zugriff von außen auf jedes Blockierstück verhindert ist. Insbesondere sind die Federstege zum Halten der Hinterraststücke zum Halten des Einsteckteils angewinkelt zu einer Längsmittelachse des Aufnahmeteils bzw, des Sicherungsteils.

Aus der DE 10 2006 013 899 und der EP 0 568 075 sind ebenfalls Steckverbinder bekannt, bei denen die federelastischen Haltemittel in Form von Rastarmen Bestandteil des Gehäuses des Steckverbinders sind. Da das Gehäuse einstückig ausgebildet ist, ist es erforderlich, für das Gesamtgehäuse ein Material zu verwenden, das eine Federelastizität der Rastarme bzw. Rastmittel ermöglicht. Insbesondere bei Anforderungen in Bezug auf eine geringe Entflammbarkeit von Bauteilen können Materialienzusätze erforderlich sein, die zu einer Versprödung des Kunststoffgehäuses des Steckverbinders führen, so dass die notwendige Elastizität für die elastischen Rastmittel nicht mehr gewährleistet ist. Zudem ist es oftmals erforderlich, ein Gehäuse aus Metall zu verwenden, so dass ebenfalls elastische Rastmittel schwierig realisierbar sind. Bei der Bündelung von Leitungen z. B. im Fahrzeugbau liegen oftmals sehr begrenzte Raumverhältnisse vor, so dass die Gehäuse der Leitungsverbinder unmittelbar Kontakt miteinander haben können, was aber zur Beschädigung und Beeinträchtigung der elastischen Rastmittel führen kann.

Der Erfindung liegt die Aufgabe zu Grunde, ausgehend von einem Steckverbinder der eingangs genannten Art, einen Steckverbinder zur Verfügung zu stellen, der unabhängig vom Gehäusematerial und auch bei beengten Einbauverhältnissen die volle Elastizität und eine einwandfreie Funktion der Rastmittel gewährleistet sowie eine kompakte Bauweise besitzt und eine geschützte Anordnung der Rastarme ermöglicht.

Erfindungsgemäß wird dies durch die Merkmale des kennzeichnenden Teils des Anspruchs 1 erreicht. Erfindungsgemäß sind die Rastmittel nicht Bestandteil des Gehäuses, sondern die Rastmittel sind an dem separaten Teil der Adapterhülse ausgebildet, die in das Gehäuse eingesetzt wird. Damit können für das Gehäuse und die Adapterhülse unterschiedliche Materialien verwendet werden. Zudem sitzt die Adapterhülse im Wesentlichen umfangsgemäß geschützt in dem Gehäuse, so dass deren Funktion von anliegenden anderen Gehäusen nicht wesentlich beeinträchtigt werden kann. Indem die Formschlusselemente im eingesteckten Zustand in Ausnehmungen in der Umfangswand des Muffenabschnittes formschlüssig rastend eingreifen, wird es ermöglicht, dass die Adapterhülse relativ kurz und kompakt ausgebildet werden kann. Zudem gewährleisten die erfindungsgemäßen Formschlusselemente sowohl eine axiale Fixierung als auch insbesondere eine umfangsgemäße Fixierung der Adapterhülse in dem Muffenabschnitt. Durch den Formschluss in axialer Richtung kann die Adapterhülse durch Zugbeanspruchung nicht gelöst werden und durch einen erfindungsgemäßen Formschluss in Umfangsrichtung wird auch eine Verdrehung der Adapterhülse vermieden.

Erfindungsgemäß kann es von Vorteil sein, wenn die Adapterhülse einen am Umfang ihrer Durchgangsöffnung an ihrem in Einsteckrichtung gesehen hinteren Öffnungsrand verlaufenden Ringkragen aufweist, der im eingesteckten Zustand der Adapterhülse außerhalb des Muffenabschnittes angeordnet ist, wobei auch die ersten Rastnocken ebenfalls außerhalb des Muffenabschnitts verlaufen.

Erfindungsgemäß ist es ebenfalls von Vorteil, wenn um 180 ° zueinander versetzte Rastarme an der Adapterhülse ausgebildet sind, sowie an den freien Enden der Rastarme in Bezug auf die Längsmittelachse radial nach außen abstehende Betätigungsfortsätze vorhanden sind. Hierbei ist es zweckmäßig, wenn im Bereich der Betätigungsfortsätze am Ringkragen tangential zur Durchgangsöffnung der Adapterhülse verlaufende, randoffene Führungsnuten vorhanden sind, wobei der Ringkragen durch die Betätigungsfortsätze unterbrochen ist, und die Betätigungsfortsätze jeweils einen parallel zur Längsmittelachse außerhalb der jeweiligen Führungsnut verlaufenden, entgegen der Einsteckrichtung abgewinkelten Fortsatz aufweisen, so dass zwischen den Fortsätzen und den Führungsnuten eine zum Einführen eines Lösewerkzeugs geeignete Durchstecköffnung ausgebildet ist. Diese erfindungsgemäße Ausbildung ermöglicht das Lösen des eingesteckten Steckverbinders mittels eines insbesondere gabelförmigen Lösewerkzeugs, wobei die Gabelzinken in die Durchstecköffnung eingeführt werden und durch eine Verschiebung des Lösewerkzeugs senkrecht zur Längsmittelachse die Rastarme außer Angriff mit ihren Rastnocken aus einer Rastnut des Gegensteckverbinders gebracht werden können.

Alternativ kann es zweckmäßig sein, wenn der Ringkragen von der Adapterhülse durch umfangsgemäße Spaltabschnitte zwischen seinen Rastarmen getrennt ist, und der Ringkragen die Rastarme im Bereich der ersten Rastnocken an deren Außenseite umgibt und mit diesen im Bereich der Rastnocken verbunden ist sowie der Ringkragen mittig zwischen den Rastarmen Verformungsabschnitte aufweist, die unter einer radial zur Längsmittelachse gerichteten Kraft derart verformbar sind, dass eine radial nach außen gerichtete Spreizung der Rastarme derart erzeugt wird, dass die ersten Rastnocken ihre Lösestellung einnehmen. Hierdurch wird eine Lösbarkeit des eingesteckten Gegensteckverbinders von Hand ermöglicht.

Insbesondere ist es vorteilhaft, wenn die Dicke der Rastarme geringer ist, als die Wandstärke der Adapterhülse, so dass zwischen einem Außenumfang der Wandung der Adapterhülse und den Rastarmen eine radial in Richtung auf die Längsmittelachse verlaufende Stufenfläche ausgebildet ist. Hierbei ist insbesondere die radiale Höhe der Stufenfläche und die Länge der Rastarme innerhalb des Muffenabschnitts derart bemessen, dass ein radial nach außen gerichteter Federweg der Rastnocken derart gegeben ist, dass ein radialer Abstand der radial nach außen gespreizten Rastnocken größer/gleich einem Innendurchmesser der Adapterhülse und/oder größer/gleich dem Außendurchmesser des Steckerschaftes des Gegensteckverbinders ist.

Weiterhin ist es von Vorteil, wenn der Außendurchmesser des Ringkragens gleich dem Außendurchmesser des Muffenabschnitts ist. Insbesondere ist es vorteilhaft, wenn der radiale Abstand der abgewinkelten Fortsätze an deren Außenflächen gleich dem Außendurchmesser des Muffenabschnitts ist. Weiterhin kann es vorteilhaft sein, wenn ein Außendurchmesser des Ringkragens im Bereich der Rastnocken gleich dem Außendurchmesser des Muffenabschnitts ist.

Durch die erfindungsgemäße Ausgestaltung und Anordnung können die Rastarme im Bereich der Rastnocken durch den eingesteckten Steckverbinder nach außen auseinandergebogen werden, so dass die Rastarme mit den abgewinkelten Fortsätzen bzw. dem Ringkragen während des Steckvorgangs im Bereich der Rastnocken radial gegen den Außenumfang des Muffenabschnittes vorstehen, wodurch eine Einsteckkontrolle gegeben ist, da sie erst nach Einrasten in die Rastnut des Steckerschaftes des Gegensteckverbinders zurückfedern und somit angezeigt wird, dass der Einsteckvorgang abgeschlossen ist.

Weiterhin ist es erfindungsgemäß von Vorteil, wenn in Einsteckrichtung vor der Adapterhülse in der Durchgangsöffnung des Muffenabschnitts eine Umfangsdichtung angeordnet ist zum Abdichten eines Umfangsspaltes zwischen einer Innenwandung des Muffenabschnitts und dem Steckerschaft eines Gegensteckverbinders. Hierbei ist es von Vorteil, wenn in dem Muffenabschnitt am Übergang des im Durchmesser erweiterten Abschnitts des Muffenabschnitts zum Durchgangskanal eine Ringschulter zur Anlage der Umfangsdichtung ausgebildet ist und die Umfangsdichtung zwischen der Ringschulter und einer Stirnendfläche der Adapterhülse eingekammert ist. Diese erfindungsgemäße Anordnung der Umfangsdichtung ermöglicht es, dass weder im Steckverbinder noch im Gegensteckverbinder Hinterschnitte ausgebildet werden müssen, um eine Kammerung der Umfangsdichtung zu erreichen. Zudem sitzt die Umfangsdichtung im Innern des Muffenabschnitts geschützt.

Weiterhin kann es erfindungsgemäß von Vorteil sein, wenn der den Muffenabschnitt gegenüberliegende Anschlussabschnitt des Gehäuses als Anschlusszapfen ausgebildet ist, wobei der Anschlusszapfen im Bereich seines freien Endes in einer Umfangsnut eine Umfangsdichtung aufweist und an dem dem freien Ende des Anschlusszapfens gegenüberliegenden Bereich mehrere sich in Richtung auf das freie Ende erstreckende, parallel zur Längsmittelachse des Anschlusszapfens verlaufende Raststege angeordnet sind, die am Umfang des Anschlusszapfens gleichmäßig beabstandet verteilt sind. Vorzugsweise sind hierbei erfindungsgemäß zwei diametral gegenüberliegende Raststege vorhanden. Die Raststege weisen an ihren freien Enden radial in Bezug auf die Längsmittelachse des Anschlusszapfens nach innen gerichtete Rastansätze auf. Erfindungsgemäß ist es weiterhin hierbei von Vorteil, dass zwischen den Raststegen und dem Anschlusszapfen ein Führungsspalt ausgebildet ist, in den eine Anschlusshülse eines Anschlussverbinders aufgeschoben werden kann, die eine innere Durchgangsbohrung aufweist, in der der Anschlusszapfen geführt ist, und wobei am freien Ende der Anschlusshülse an ihrem äußeren Umfang ein radial nach außen in Bezug auf die Längsmittelachse abstehender Ringansatz ausgebildet ist, der mit den Rastansätzen der Raststege korrespondierende Auflaufschrägen aufweist, so dass ein Aufschieben der Anschlusshülse möglich ist, wobei die Raststege radial nach außen gespreizt werden. Diese erfindungsgemäße Ausbildung von dem Anschlusszapfen und der Anschlusshülse ermöglicht eine axiale Relativverschiebung dieser Teile im Verbindungszustand zueinander. Durch diese Ausbildung wird die Crashsicherheit eines erfindungsgemäßen Steckverbinders wesentlich erhöht, denn diese erfindungsgemäße Ausbildung ermöglicht beispielsweise einen Längenausgleich von maximal 50 mm bis 60 mm, bevorzugt 20 mm Weg.

Weiterhin bezieht sich die vorliegende Erfindung auf eine Steckkupplung bestehend aus einem Steckverbinder nach einer der vorgenannten Ausführungen sowie einem Gegensteckverbinder zum Einstecken in den erfindungsgemäßen Steckverbinder, wobei der Gegensteckverbinder einen Steckerschaft und eine in Einsteckrichtung hinter dem Steckerschaft ausgebildete Rastnut aufweist. Der Steckerschaft ist derart dimensioniert, dass im eingesteckten Zustand sein freies Ende aus der Adapterhülse herausragt und in dem Durchgangskanal des Gehäuses des Steckverbinders endet. Der Steckerschaft besitzt einen Außendurchmesser, der größer ist als ein radialer Abstand der Rastnocken der Federarme. Erfindungsgemäß kann es vorteilhaft sein, wenn die Rastnut eine derartige axiale Erstreckung in Richtung der Einsteckrichtung aufweist, dass ein axialer Verschiebeweg des Steckerschaftes im eingesteckten Zustand in der Adapterhülse um eine bestimmte Länge gegeben ist, und wobei die Länge des Steckerschaftes zwischen der Rastnut und seinem freien Ende derart bemessen ist, dass der Steckerschaft um die Länge des axialen Verschiebeweges verlängert ist, so dass er in jeder Lage mit seinem freien Ende aus der Adapterhülse herausragt und in dem Durchgangskanal des Gehäuses endet. Diese vorteilhafte Ausbildung ermöglicht einen Längenausgleich beispielsweise um einen Weg von 5 mm.

Der erfindungsgemäße Steckverbinder bzw. die erfindungsgemäße Steckkupplung findet insbesondere Anwendung in Leitungssystemen für Batteriekühlsysteme, Kraftstoffleitungen, Kühlwasserleitungen und bei der Tankentlüftungsleitung für beispielsweise Adblue-Tanks. Es liegt eine Eignung insbesondere bis zu einem Druckbereich bis maximal 5 bar, vorzugsweise 2 bar vor. Darüber hinaus zeichnet sich der erfindungsgemäße Steckverbinder durch eine sehr kompakte Bauweise aus, und der Gegensteckverbinder besitzt eine sehr einfache konstruktive Ausgestaltung.

Vorteilhafte Ausgestaltungen der Erfindung sind in den Unteransprüchen enthalten. Anhand der in den beiliegenden Zeichnungen dargestellten Ausführungsbeispiele wird die Erfindung näher erläutert. Es zeigen:
- Fig. 1: eine perspektivische Explosionsdarstellung einer ersten Ausführungsform eines Steckverbinders und Gegensteckverbinders,
- Fig. 2: eine Frontansicht auf eine erfindungsgemäße Adapterhülse gemäß Fig. 1,
- Fig. 3: einen Schnitt entlang der Schnittlinie III-III in Fig. 2,
- Fig. 4: einen Längsschnitt durch einen Steckverbinder gemäß Fig. 1 im eingesteckten Zustand des Gegensteckverbinders,
- Fig. 5: eine perspektivische Explosionsdarstellung einer weiteren Ausführungsform eines Steckverbinders mit Gegensteckverbinder,
- Fig. 6: eine Frontansicht einer Adapterhülse gemäß Fig. 5,
- Fig. 7: einen Schnitt entlang der Schnittlinie VII-VII in Fig. 6,
- Fig. 8: einen Längsschnitt durch eine Ausgestaltung gemäß Fig. 5 im gesteckten Zustand des Gegensteckverbinders,
- Fig. 9: einen Schnitt gemäß Fig. 8 bei einer weiteren Ausführungsform eines Steckverbinders und Gegensteckverbinders,
- Fig. 10: eine perspektivische Seitenansicht einer weiteren Ausführungsform eines Steckverbinders und eines zugehörigen Anschlussverbinders,
- Fig. 11: einen Längsschnitt durch die Ausführungsform gemäß Fig. 10,
- Fig. 12 und Fig. 13: Längsschnitte durch einen Steckverbinder und einen nicht vollständig eingesteckten Gegensteckverbinder entsprechend den Ausführungen gemäß Fig. 1 und Fig. 5,
- Fig. 14: einen Schnitt gemäß Fig. 8 durch eine weitere Ausführungsform eines Steckverbinders,
- Fig. 14a: eine Vergrößerung als Detailansicht eines Ausschnitts B in Fig. 14,
- Fig. 15: eine Explosionsdarstellung einer Ausführungsform eines erfindungsgemäßen Steckverbinders,
- Fig. 16: einen Schnitt durch einen Steckverbinder gemäß Fig. 15 im eingesteckten Zustand des Gegensteckverbinders,
- Fig. 17: eine perspektivische Darstellung einer Adapterhülse gemäß Fig. 15,
- Fig. 18: eine Ansicht auf die Adapterhülse gemäß Fig. 17 in Richtung des Pfeils XVIII und
- Fig. 19: eine Ansicht auf die Adapterhülse gemäß Fig. 17 entsprechend dem Pfeil XIX in Fig. 17.

In den verschiedenen Figuren der Zeichnung sind gleiche Teile stets mit denselben Bezugszeichen versehen.

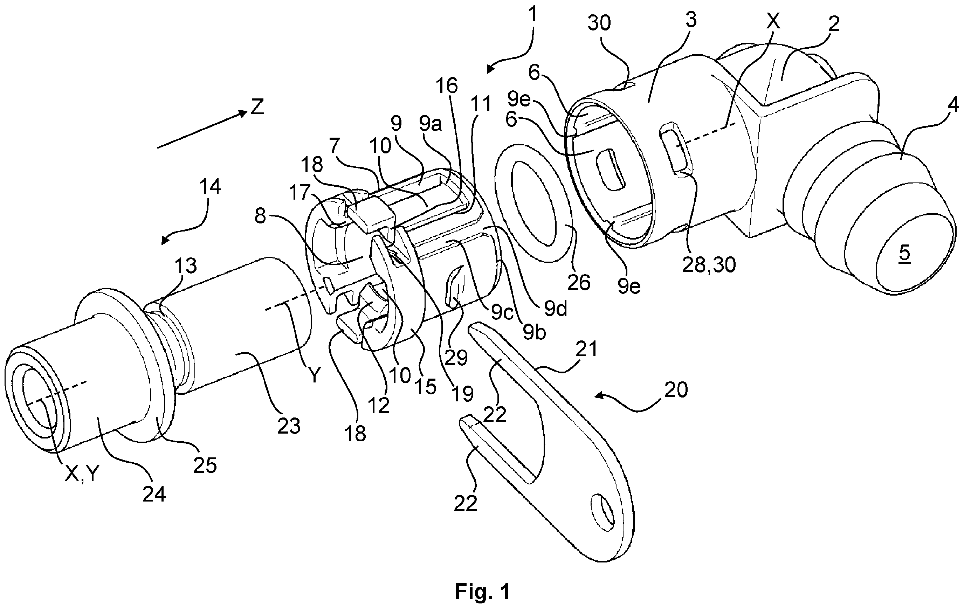

Wie in Fig. 1 dargestellt, weist ein Steckverbinder 1 ein Gehäuse 2 auf, das an seinem Ende einen Muffenabschnitt 3 besitzt. An seinem anderen Ende besitzt das Gehäuse 2 einen Steckabschnitt 4 z. B. zum Aufstecken einer Fluidleitung oder eines Leitungsverbinders. Dieser Steckabschnitt 4 kann aber auch als Aufnahmeabschnitt zum Einstecken einer Fluidleitung ausgebildet sein. Alternativ kann das Gehäuse 2 auch am anderen Ende an ein Aggregat angeschlossen sein. Der Steckverbinder 1 kann als Winkelsteckverbinder, wie in Fig. 1 dargestellt, ausgebildet sein. Alternativ kann aber auch der Steckverbinder 1 zwischen dem Muffenabschnitt 3 und dem gegenüberliegenden Ende 4 nicht abgewinkelt sein, oder es können beliebige Winkel zwischen den Teilen 1 und 4 ausgebildet sein. Ebenfalls ist ein T-förmiger oder Y-förmiger Steckverbinder möglich.

Das Gehäuse 2 weist einen Durchgangskanal 5 auf. Der Durchgangskanal 5 besitzt im Bereich des Muffenabschnitts 3 einen im Durchmesser vergrößerten Kanalabschnitt 6.

In den Muffenabschnitt 3 mit dem im Durchmesser vergrößerten Kanalabschnitt 6 des Gehäuses 2 wird eine Adapterhülse 7 eingesetzt. Diese Adapterhülse 7 weist eine Durchgangsöffnung 8 auf. Weiterhin besitzt die Adapterhülse 7 eine die Durchgangsöffnung 8 umfassende Hülsenwandung 9. Insbesondere in zwei einander diametral gegenüberliegenden Abschnitten sind in der Hülsenwandung 9 Rastmittel ausgebildet. Diese Rastmittel bestehen vorzugsweise aus zwei in Bezug auf eine Längsmittelachse X-X der Adapterhülse 7 radial elastische Rastarme 10, die um 180° zueinander versetzt angeordnet sind. Diese Rastarme 10 verlaufen parallel der Längsmittelachse X-X und sind durch schlitzförmige Freischnitte 11 an ihren Längsseiten von der Hülsenwandung 9 getrennt. An ihrem in Einsteckrichtung Z vorderen Ende der Adapterhülse 7 sind die Rastarme 10 an die Hülsenwandung 9 angebunden. Hierbei besitzen die Rastarme 10 vorzugsweise eine geringere Dicke als die Wandstärke der Hülsenwandung 9, so dass zwischen dem Außenumfang der Hülsenwandung 9 und den Rastarmen 10 eine in Richtung auf die Längsmittelachse X-X verlaufende Stufenfläche 9a ausgebildet ist.

Wie in Fig. 1 weiterhin zu erkennen ist, kann es zweckmäßig sein, wenn am in Einsteckrichtung Z vorderen Ende der Adapterhülse 7 durch eine Durchmesserreduzierung eine Ringstufe 9b ausgebildet ist. Ausgehend von dieser Ringstufe 9b erstrecken sich am Umfang der Adapterhülse 7 parallel zur Längsmittelachse X-X verlaufende Führungsnuten 9c, deren Nutgrund auf demselben Radius um die Längsmittelachse X-X liegt wie der Umfang der Ringstufe 9b. Die Führungsnuten 9c weisen jeweils eine sich trichterförmig in Einsteckrichtung Z erweiternde Einführungsöffnung 9d auf. Die Führungsnuten 9c dienen zur Führung von im Innern des Kanalabschnitts 6 an seiner Innenwand ausgebildeten Führungsrippen 9e beim Einstecken der Adapterhülse 7 in den Kanalabschnitt 6, wobei die Adapterhülse 7 derart ausgerichtet wird, dass die Führungsrippen 9e in die Führungsnuten 9c eingeführt werden. Hierdurch ergibt sich eine lagerichtige Positionierung der Adapterhülse 7 im Kanalabschnitt 6.

Die Rastarme 10 weisen zum Beispiel an ihren freien Enden radial, in Richtung auf die Längsmittelachse X-X ausgerichtete Rastnocken 12 auf. Diese Rastnocken 12 rasten im in die Durchgangsöffnung 8 eingesteckten Zustand der Adapterhülse 7 in eine Rastnut 13 eines Gegensteckverbinders 14 ein. Diese Rastnocken 12 liegen außerhalb des Muffenabschnitts 3 im eingesteckten Zustand der Adapterhülse 7

Weiterhin kann es zweckmäßig sein, wenn die Adapterhülse 7 am Umfang ihrer Durchgangsöffnung 8, d. h. im in Einsteckrichtung Z gesehen hinten liegenden Öffnungsbereich, einen Ringkragen 15 auf. Dieser Ringkragen 15 erstreckt sich radial gegenüber der Hülsenwandung 9 nach außen, so dass sein Außendurchmesser größer ist als der Außendurchmesser der Hülsenwandung 9 und zweckmäßigerweise gleich groß wie der Außendurchmesser des Muffenabschnitts 3. Der Ringkragen 15 bildet eine Art Einsteckbegrenzung für die Adapterhülse 7, wobei der Ringkragen 15 sich im eingesteckten Zustand der Adapterhülse 7 außerhalb des Muffenabschnittes 3 befindet.

An den Rastarmen 10 sind insbesondere an deren freien Enden in Bezug auf die Längsmittelachse X-X radial nach außen abstehende, stegartige Betätigungsfortsätze 16 ausgebildet. Diese Betätigungsfortsätze 16 verlaufen durch radial verlaufende Ausschnitte 17, und zwar in Bezug auf die Längsmittelachse X-X, so dass der Ringkragen 15 durch diese Ausschnitte 17 unterbrochen ist. An ihren freien Enden besitzen die Betätigungsfortsätze 16 entgegen der Einsteckrichtung Z abgewinkelte Fortsätze 18, die parallel zur Längsmittelachse X-X verlaufen. Diese Fortsätze 18 verlaufen zweckmäßigerweise bündig zum Außenumfang des Ringkragens 15, so dass der radiale Abstand der abgewinkelten Fortsätze 18 an ihrer Außenfläche gleich dem Außendurchmesser des Ringkragens 15 ist. Im Bereich der Fortsätze 18 sind in dem Ringkragen 15 tangential zur Durchgangsöffnung 8 der Adapterhülse 7 in radialer Richtung nach außen randoffene, im Querschnitt U-förmige Führungsnuten 19 ausgebildet. Die Fortsätze 18 und die Führungsnuten 19 bilden eine Durchstecköffnung für ein Lösewerkzeug 20. Dieses Lösewerkzeug 20 besitzt z. B. einen gabelförmigen Endabschnitt 21 mit zwei diametral gegenüberliegenden Gabelzinken 22. Der Abstand der Gabelzinken 22 entspricht dem radialen Abstand der Führungsnuten 19 im Bereich ihrer Bodenabschnitte. Die Breite der Gabelzinken 22 ist kleiner/gleich der Breite der Führungsnuten 19. Die Gabelzinken 22 besitzen an ihren freien Enden eine Höhe, die kleiner ist als der radiale Abstand der abgewinkelten Fortsätze 18 zum Bodenabschnitt der Führungsnuten 19. Von ihrem freien Ende aus nimmt die Höhe der Gabelzinken 22 stetig zu auf ein Höhenendmaß. Dieses Höhenendmaß ist derart, dass durch Einführen der Gabelzinken 22 senkrecht zur Längsmittelachse X-X in die von den Fortsätzen 18 und den Führungsnuten 19 gebildeten Durchstecköffnungen die Rastarme 10 radial nach außen elastisch gebogen werden, und zwar derart, dass der radiale Abstand ihrer Rastnocken 12 größer ist als der Außendurchmesser eines Steckerschaftes 23 des Gegensteckverbinders 14. Befindet sich der Steckerschaft 23 im eingesteckten Zustand des Gegensteckverbinders 14 innerhalb der Adapterhülse 7, wobei die Rastnocken 12 in die Rastnut 13 des Gegensteckverbinders 14 eingerastet sind, kann durch Einstecken des Lösewerkzeuges 20 in die Führungsnuten 19 die Einraststellung der Rastnocken 12 aufgehoben und der Steckerschaft 23 aus der Adapterhülse 7 herausgezogen werden.

Der Gegensteckverbinder 14 besitzt den Steckerschaft 23, der einen kreisförmigen Querschnitt senkrecht zu seiner Mittelachse Y-Y aufweist. Der Außendurchmesser des Steckerschafts 23 ist größer als ein radialer Abstand der Rastnocken 12, so dass die Rastarme 10 beim Einstecken des Steckerschaftes 23 radial nach außen verbogen werden. An seinem in Einsteckrichtung Z vorderen Ende weist der Steckerschaft 23 die umfänglich verlaufende Rastnut 13 auf. Die Rastnut 13 weist eine in Einsteckrichtung Z vordere, senkrecht zur Mittelachse Y-Y verlaufende Anlagefläche auf, die mit einer ebenfalls senkrecht zur Längsmittelachse X-X verlaufenden Anlagefläche des Rastnockens 12 derart zusammenwirkt, dass ein Formschluss in im eingerasteten Zustand axialer Richtung gegeben ist, so dass ein selbstständiges Lösen des Steckerzapfens bzw. des Steckerschaftes 23 unter Zugbeanspruchung nicht erfolgen kann. An dem dem Steckerschaft 23 gegenüberliegenden Ende des Gegensteckverbinders 14 ist ein Anschlussabschnitt 24 zum Anschluss einer Fluidleitung oder eines Aggregates vorgesehen. Zwischen dem Anschlussabschnitt 24 und der Rastnut 13 des Gegensteckverbinders 14 ist zweckmäßigerweise ein Ringbund 25 angeformt, der als Anschlag dienen kann.

Die Länge des Steckerschaftes 23 ist derart bemessen, dass dieser im eingesteckten Zustand in die Adapterhülse 7 mit seinem freien Ende aus der Adapterhülse 7 herausragt und bis in den Durchgangskanal 5 des Gehäuses 2 sich erstreckt.

Weiterhin ist vorteilhaft vorgesehen, dass innerhalb des Muffenabschnittes 3 eine Umfangsdichtung 26 in Einsteckrichtung Z vor der Adapterhülse 7 angeordnet ist. Diese Umfangsdichtung 26 dichtet den Umfangsspalt zwischen dem Steckerschaft 23 in dessen eingesteckten Zustand und der Innenwandung des Muffenabschnitts 3 ab. Die Umfangsdichtung 26 ist vorzugsweise als O-Dichtring ausgebildet und wird innerhalb des Muffenabschnitts 3 zwischen einer inneren Ringschulter 27 des Muffenabschnitts 3 am Übergang des Muffenabschnitts 3 und einer Stirnendfläche der Adapterhülse 7 eingekammert. Aufgrund dieser erfindungsgemäßen Ausgestaltung entfällt die Ausbildung einer Aufnahmenut für die Umfangsdichtung 26, so dass fertigungsmäßig die Ausbildung von Hinterschnitten nicht erforderlich ist. Darüber hinaus ist die Umfangsdichtung 26 im montierten Zustand der Adapterhülse 7 im Innern des Muffenabschnitts 3 geschützt angeordnet. Der Innendurchmesser des Durchgangskanals 5 des Gehäuses 2 und der Innendurchmesser der Durchgangsöffnung 8 der Adapterhülse 7 sind an den Außendurchmesser des Steckerschaftes 23 des Gegensteckverbinders 14 angepasst. Zweckmäßigerweise sind der Innendurchmesser des Durchgangskanals 5 und der Durchgangsöffnung 8 gleich groß. Durch eine elastische Verformung des Dichtrings 26, die durch das Einstecken des Steckerschaftes 23 verursacht wird, erfolgt einerseits eine Abdichtung nach außen und andererseits eine Fixierung des Steckerschaftes 23 in der Adapterhülse 7 bzw. im Muffenabschnitt 3 durch die innerhalb der O-Dichtung erzeugten Verformungsspannung.

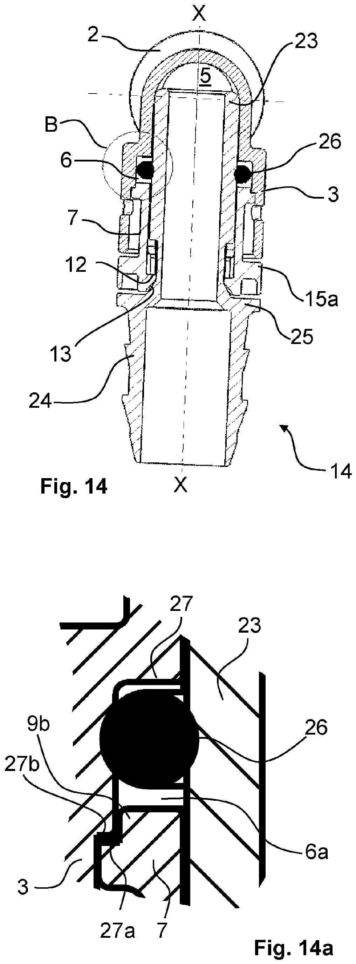

Die Ringstufe 9b der Adapterhülse 7 besitzt eine radial zur Längsmittelachse X-X verlaufende, umlaufende Anlagefläche 27a. Wie in Fig. 14 und 14a dargestellt ist, besitzt insbesondere der Kanalabschnitt 6 eine im Sinne einer Durchmesservergrößerung ausgebildete ringförmige Anschlagfläche 27b, die derart angeordnet ist, dass die Umfangsdichtung 26 zwischen der Ringschulter 27 und der Anschlagfläche 27b verläuft. Im eingesteckten Zustand liegt die Adapterhülse 7 mit ihrer Anlagefläche 27a an der Anschlagfläche 27b an, und die Adapterhülse 7 ragt mit ihrer Ringstufe 9b in den Abschnitt 6a des Kanalabschnitts 6 hinein, der von der Umfangsdichtung 26 abgedichtet wird.

Durch die vorstehende Ausbildung erfolgt ein geometrischer Abschluss der Aufnahme für die Umfangsdichtung 26, eine Begrenzung des Übersteckwegs bei der Montage der Adapterhülse 7, eine Aufnahme bzw. Weiterleitung der Aufdornkraft, sowie eine Aufrechterhaltung eines Spaltmaßes zwischen dem Muffenabschnitt 3 des Gehäuses 2 und der Adapterhülse 7.

Gemäß der Erfindung ist die Adapterhülse 7 innerhalb des Muffenabschnitts 3 mittels Formschlusselementen 28 in axialer und vorzugsweise auch umfangsgemäßer Richtung formschlüssig fixiert. Diese Formschlusselemente 28 bestehen vorzugsweise aus nach außen am Umfang der Adapterhülse 7 zwischen den Rastarmen 10 ausgebildeten, entgegen der Einsteckrichtung Z der Adapterhülse 7 gerichteten, radial elastisch verformbaren Rastzungen 29.

Die Rastzungen 29 verlaufen zweckmäßig unter einem spitzen Winkel zur Längsmittelachse X-X schräg nach außen im Sinne einer DurchmesserVergrößerung. Die Rastzungen 29 korrespondieren mit Ausnehmungen 30 in der Umfangswand des Muffenabschnitts 3. Im eingesteckten Zustand der Adapterhülse 7 in den Muffenabschnitt 3 rasten die Rastzungen 29 in die Ausnehmungen 30 formschlüssig ein. Die Ausnehmungen 30 sind vorteilhafterweise als Durchbrüche der Wandung des Muffenabschnitts 3 ausgebildet. Die Rastzungen 29 sind insbesondere derart dimensioniert, dass ihre freien Enden im eingerasteten Zustand nicht aus den Durchbrüchen herausragen. Die Rastzungen 29 weisen an ihren freien Enden senkrecht zur Längsmittelachse X-X der Adapterhülse 7 verlaufende Endflächen auf, und die Ausnehmungen 30 weisen den Endflächen der Rastzungen 29 gegenüberliegende Anlageflächen auf, die ebenfalls senkrecht zur Längsmittelachse X-X verlaufen. Diese Ausbildung der gegenüberliegenden Flächen bedingt im eingerasteten Zustand einen Formschluss in axialer Richtung. Zweckmäßigerweise sind die Rastzungen 29 und die Ausnehmungen 30 derart aneinander angepasst, dass im eingerasteten Zustand eine Verdrehung der Adapterhülse 7 nicht möglich ist.

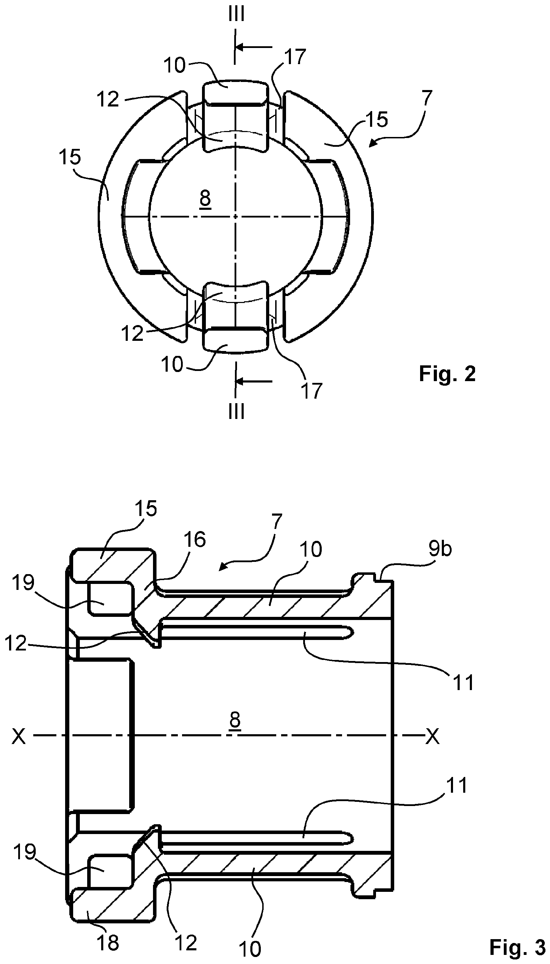

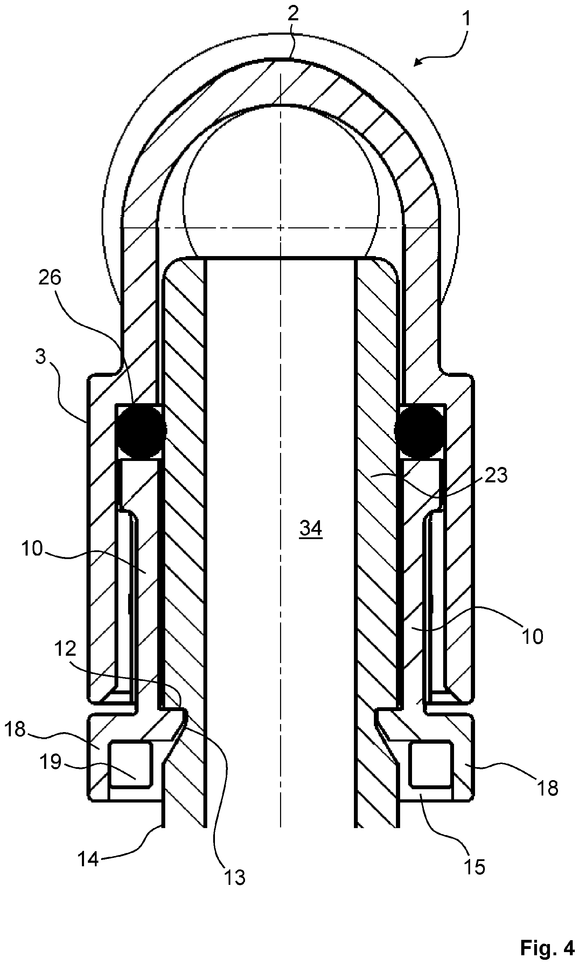

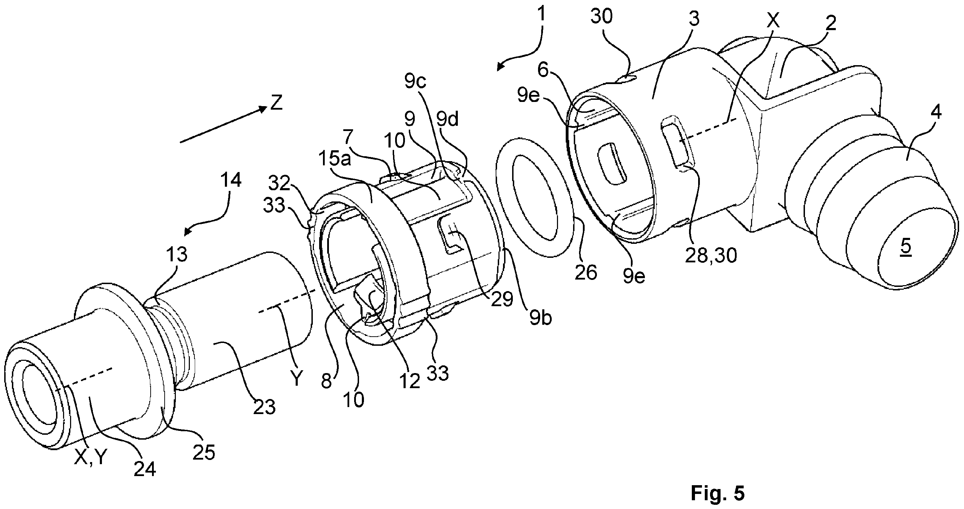

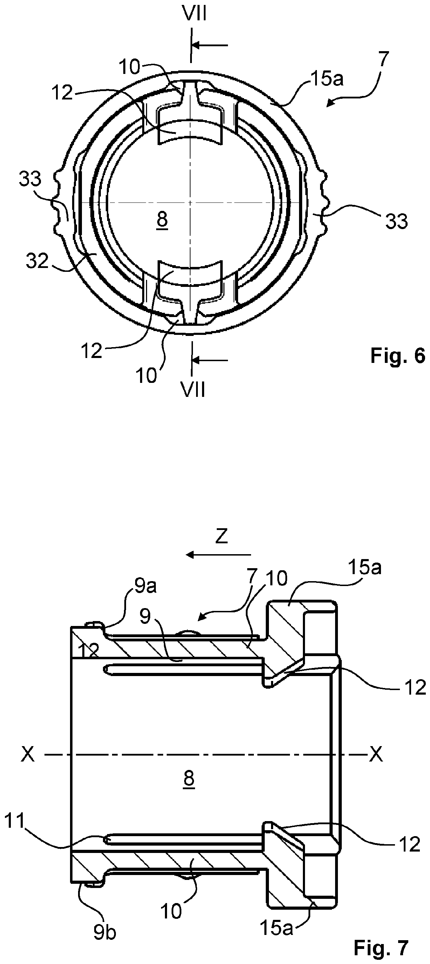

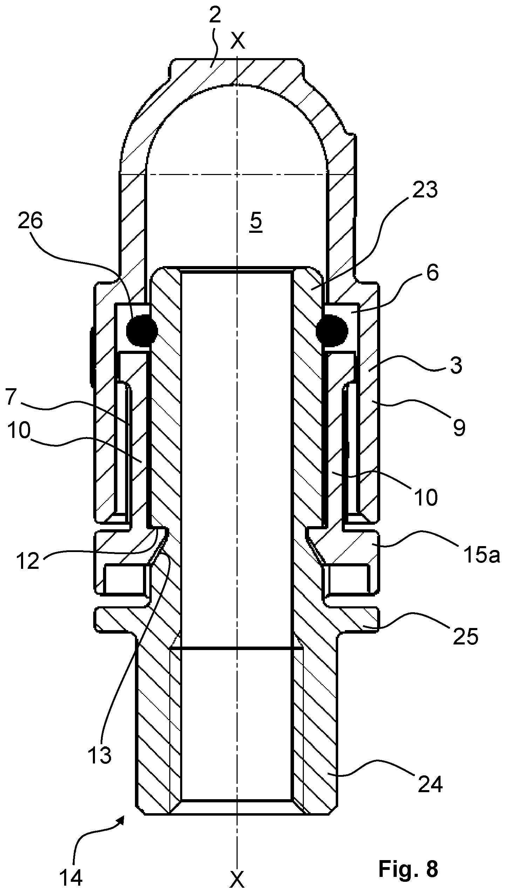

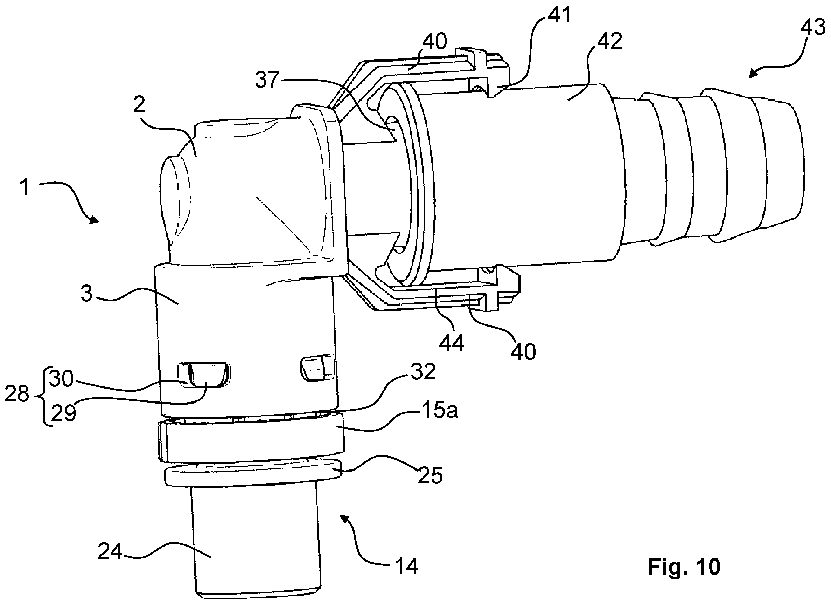

In den Figuren 5 bis 10 ist eine weitere Ausführungsform eines Steckverbinders 1 dargestellt, wobei gleiche Teile und/oder funktionsgleiche Teile wie in den Figuren 1 bis 4 des darin dargestellten Steckverbinders 1 mit denselben Bezugszeichen gekennzeichnet sind. Der Unterschied zwischen dem Steckverbinder der Figuren 1 bis 4 und dem Steckverbinder 1 gemäß den Figuren 5 bis 10 besteht in der Ausbildung des Ringkragens. Der Ringkragen 15a gemäß den Figuren 5 bis 10 ist von der Adapterhülse 7 durch umfangsgemäße Spaltabschnitte 32 zwischen den Rastarmen 10 umfangsgemäß getrennt. Im Bereich der Rastnocken 12 der Rastarme 10 ist der Ringkragen 15a mit den Rastarmen 10 an deren Außenseite verbunden. Demnach umschließt der Ringkragen 15a die Adapterhülse 7 im Bereich der freien Enden der Rastarme 10. Erfindungsgemäß ist es von Vorteil, wenn der Ringkragen 15a mittig zwischen den Rastarmen 10 zwei diametral einander gegenüberliegende Verformungsabschnitte 33 aufweist. Im Bereich dieser Verformungsabschnitte 33 ist der Ringkragen 15a durch eine radial von außen zur Längsmittelachse X-X aufgebrachte Kraft derart radial nach innen verformbar, dass die Rastarme 10 radial nach außen derart gespreizt werden, dass ihre Rastnocken 12 außer Eingriff aus der Rastnut 13 des Steckerschaftes 23 des eingesteckten Gegensteckverbinders 14 kommen. Hierdurch ist eine Lösbarkeit des Gegensteckverbinders 14 aus dem Steckverbinder 1 von Hand möglich. Der Außendurchmesser des Ringkragens 15a im Bereich der Rastnocken 12 ist insbesondere gleich groß wie der Außendurchmesser des Muffenabschnitts 3. Zweckmäßigerweise sind die Verformungsabschnitte 33 durch in Bezug auf die Längsmittelachse X-X radial nach außen gerichtete Ausbuchtungen des Ringkragens 15a gebildet.

Die Montage der Adapterhülse 7 bei den dargestellten Ausführungsformen erfolgt erfindungsgemäß derart, dass zunächst die Umfangsdichtung 26 in den Muffenabschnitt 3 eingebracht wird. Danach wird die Adapterhülse 7 in den Muffenabschnitt 3 eingesteckt, bis ihre Formschlusselemente 28, d. h. die Rastzungen 29, in die Ausnehmungen 30 eingerastet sind. In den derart fertig montierten erfindungsgemäßen Steckverbinder 1 wird der Gegensteckverbinder 14 eingesteckt, wobei im eingesteckten Zustand die Rastnocken 12 der Rastarme 10 in die Rastnut 13 des Gegensteckverbinders 14 einrasten.

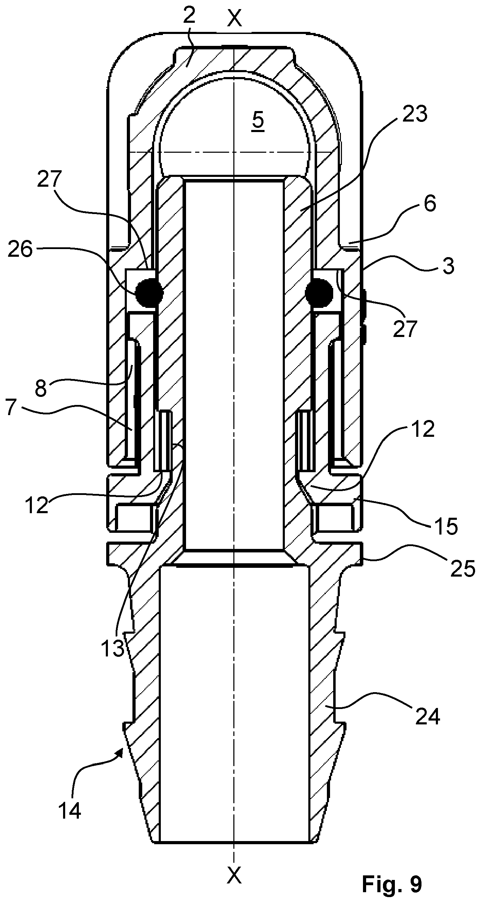

Der Anschlussabschnitt 24 des Gegensteckverbinders 14 kann als Anschlusshülse zum Einstecken oder Einschrauben eines Fluidanschlusses oder eines weiteren Verbinderteils ausgebildet sein, siehe Figuren 1 und 5. Alternativ kann der Anschlussabschnitt 24 auch als Anschlusszapfen zum Aufstecken einer Fluidleitung ausgebildet sein, siehe beispielsweise Fig. 9.

Durch den Gegensteckverbinder 14 verläuft ein Fluidkanal 34, der zweckmäßigerweise einen Kanal-Innendurchmesser aufweist, der dem Innendurchmesser des Durchgangskanals 5 des Gehäuses 2 entspricht.

Wie in Fig. 9 dargestellt ist, kann es zweckmäßig sein, wenn der Gegensteckverbinder 14 eine Rastnut 35 aufweist, die eine derartige axiale Länge aufweist, dass eine axiale Verschiebung des Steckerschaftes 23 in und gegen die Einsteckrichtung Z im eingesteckten Zustand des Gegensteckverbinders 14 erfolgen kann. Hierzu ist es weiterhin erforderlich, dass die Länge des Steckerschaftes 23 zwischen der Rastnut 35 und seinem freien Ende derart bemessen ist, dass in jeder Stellung des Steckerschaftes 23 in der Adapterhülse 7 eine umfangsgemäße Abdichtung mittels der in dem Muffenabschnitt 3 angeordneten Umfangsdichtung 26 gewährleistet ist. Das bedeutet, dass der Steckerschaft 23 um die Länge der Rastnut 35, gemessen von ihrer in Einsteckrichtung Z gesehenen hinteren Anlagefläche, d. h. der dem freien Ende benachbarten Anlagefläche, verlängert ist. Durch diese Ausgestaltung wird erreicht, dass ein Toleranzausgleich im Steckverbinder 1 möglich ist, wobei beispielsweise ein Ausgleichmaß von 5 mm zweckmäßig ist.

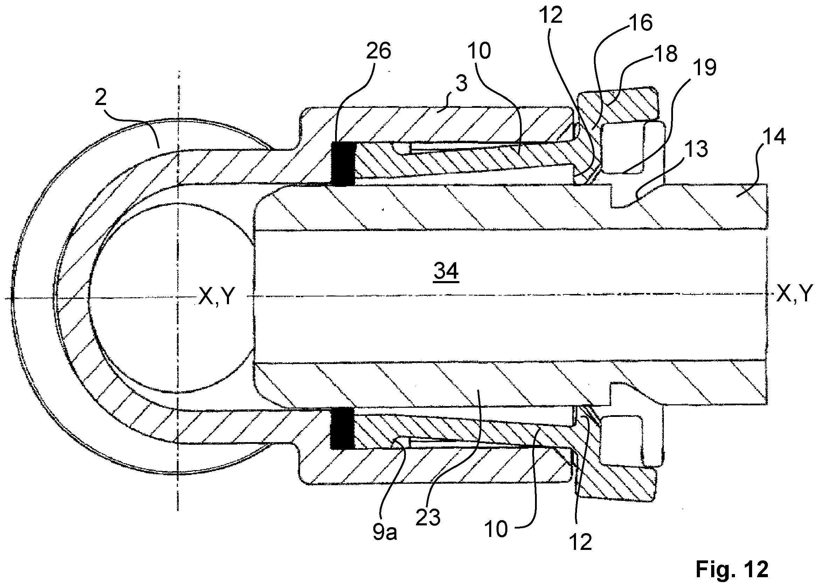

In Fig. 12 ist ein Steckverbinder 1 gemäß den Fig. 1 bis 4 in einer vorteilhaften Ausführung dargestellt, wobei der Gegensteckverbinder 14 noch nicht vollständig in den Steckverbinder 1 eingesteckt ist, so dass die Rastnocken 12 noch nicht in der Rastnut 13 eingerastet sind. Hierbei ist zu erkennen, dass der Steckerschaft 23 des Gegensteckverbinders 14 die Federarme 10 radial nach außen in Bezug auf die Längsmittelachse X-X bzw. Y-Y gespreizt hat, so dass die abgewinkelten Fortsätze 18 gegenüber dem Umfang des Muffenabschnitts 3 in radialer Richtung vorstehen. Hierdurch ergibt sich eine optische Kontrollmöglichkeit dafür, ob der Gegensteckverbinder 14 vollständig bis in seine Einraststellung der Rastnocken 12 in die Rastnut 13 eingesteckt ist. Denn in der Einraststellung schließen die abgewinkelten Fortsätze 18 bündig mit dem äußeren Umfang des Muffenabschnitts 3 ab, so dass sich kein radialer Überstand ergibt.

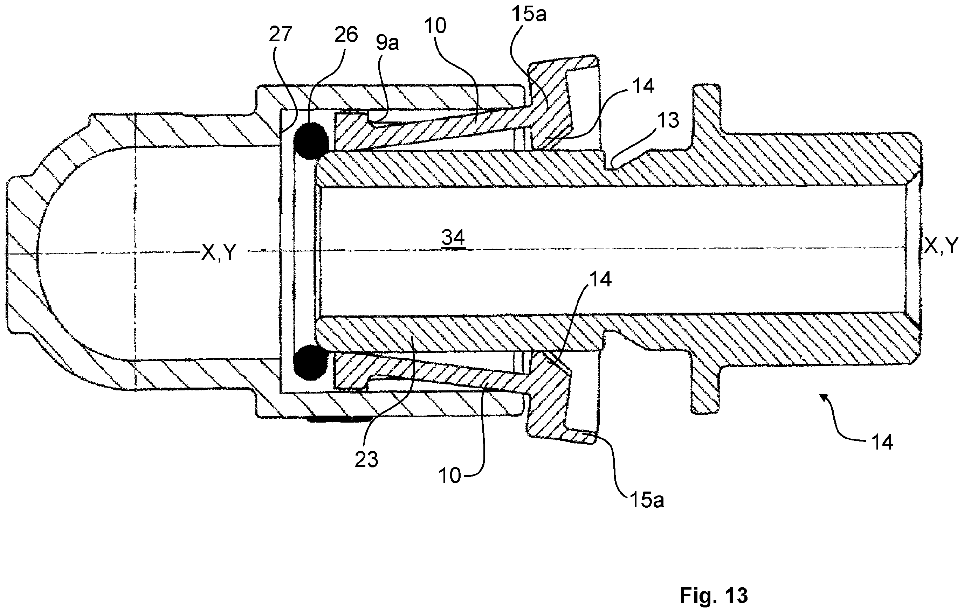

In Fig. 13 ist eine entsprechende Einstecksituation wie in Fig. 12 für einen Steckverbinder 1 gemäß den Fig. 5 bis 8 in einer bevorzugten Ausführung dargestellt. Hierbei steht der Ringkragen 15a mit seinen den Rastarmen 10 verbundenen Abschnitten radial nach außen vor, wenn der Gegensteckverbinder 15 noch nicht vollständig eingesteckt ist, so dass hierdurch wiederum eine optische Kontrolle gegeben ist, ob die Einraststellung erreicht ist oder nicht. Denn in der Einraststellung schließt der Ringkragen 15a mit seinem äußeren Umfang mit dem äußeren Umfang des Muffenabschnitts 3 umfangsgemäß bündig ab.

In den Fig. 12 und 13 ist zu erkennen, wie die radiale Höhe der Stufenfläche 9a und die Länge der Rastarme 10 innerhalb des Muffenabschnitts 3 ausschlaggebend sind für den nach außen gerichteten Federweg der Rastnocken 12, so dass der radiale Abstand der radial nach außen gespreizten Rastnocken größer/gleich einem Innendurchmesser der Adapterhülse und/oder größer als der Außendurchmesser des Steckerschaftes 23 des Gegensteckverbinders 14 ist.

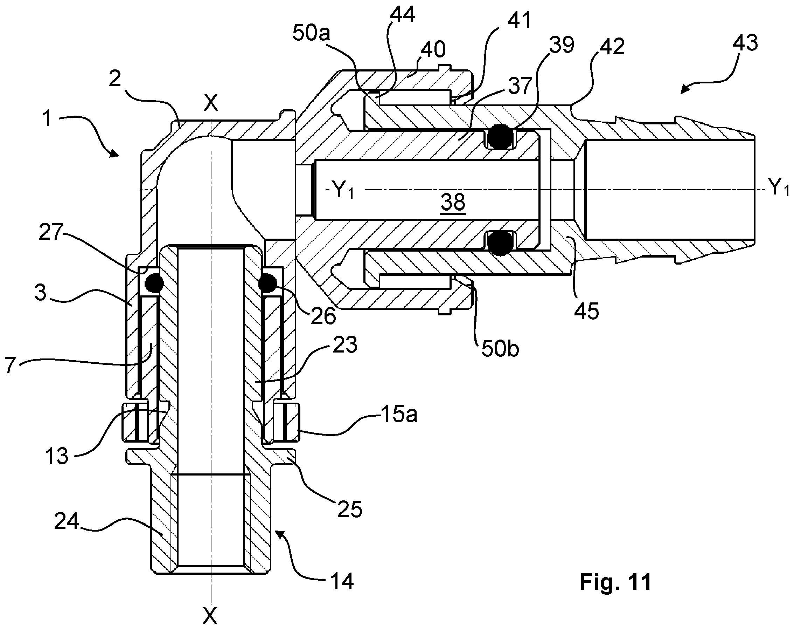

Im Übrigen sind gleiche Teile wie in den Figuren 1 bis 10 mit denselben Bezugsziffern versehen, so dass der in Fig. 11 dargestellte Steckverbinder 1 und Gegensteckverbinder 14 entsprechend den Ausführungsformen der Figuren 1 bis 10 ausgebildet sein kann.

Gemäß der Erfindung kann der dem Muffenabschnitt 3 gegenüberliegende Steckabschnitt 4 des Steckverbinders 1 als Hülse zum Einstecken oder Einschrauben eines Leitungsanschlusses oder beispielsweise als Steckerzapfen, siehe Fig. 1, ausgebildet sein.

Zudem bezieht sich die vorliegende Erfindung auch auf einen Steckverbinder 1, bei dem der dem Muffenabschnitt 3 gegenüberliegende Steckabschnitt 4 als Anschlusszapfen 37 ausgebildet ist, siehe Fig. 11. Dieser Anschlusszapfen 37 weist in Bezug auf seine Längsmittelachse Y₁-Y₁ einen kreisförmigen Querschnitt auf und besitzt einen inneren Fluidkanal 38. Dieser Fluidkanal 38 geht bei einem Steckverbinder 1 gemäß den Figuren 1 bis 11 -wie auch in den Figuren 12 und 13 dargestellt ist - in den Durchgangskanal 5 des Gehäuses 2 über. Im Bereich seines freien Endes weist der Anschlusszapfen 37 eine in einer Umfangsnut angeordnete Umfangsdichtung 39, insbesondere einen O-Dichtring auf. An dem dem freien Ende des Anschlusszapfens 37 gegenüberliegenden Bereich sind mehrere sich in Richtung auf das freie Ende erstreckende, parallel zur Längsmittelachse Y₁-Y₁ verlaufene Raststege 40 angeordnet, die am Umfang des Anschlusszapfens 37 gleichmäßig beabstandet verteilt sind. Vorzugsweise sind zwei diametral gegenüberliegende Raststege 40 vorhanden. Die Raststege 40 weisen an ihren freien Enden radial in Bezug auf die Längsmittelachse Y₁-Y₁ nach innen gerichtete Rastansätze 41 auf. Zwischen den Raststegen 40 und dem Anschlusszapfen 37 ist ein Führungsspalt ausgebildet. Auf den Anschlusszapfen 37 ist in den zwischen den Raststegen 40 und dem Anschlusszapfen 37 gebildeten Führungsspalt eine Anschlusshülse 42 aufgeschoben, die Teil eines Anschlussverbinders 43 für einen Fluid-Anschluss, zum Beispiel einer Fluidleitung ist. Diese Anschlusshülse 42 weist eine innere Durchgangsbohrung auf, die mit ihrem Innendurchmesser an den Außendurchmesser des Anschlusszapfens 37 angepasst ist, so dass ein Umfangsspalt vorhanden ist, der durch die Umfangsdichtung 39 abgedichtet wird. Zudem fixiert die Umfangsdichtung 39 aufgrund ihrer Verformungsspannung die Anschlusshülse 42 auf dem Anschlusszapfen 37.

Am freien Ende weist die Anschlusshülse 42 an ihrem äußeren Umfang einen radial nach außen in Bezug auf die Längsmittelachse Y₁-Y₁ abstehenden Ringansatz 44 auf. Dieser Ringansatz 44 und die Rastansätze 41 weisen korrespondierende Auflaufschrägflächen 50a, 50b auf, so dass bei einem Aufschieben der Anschlusshülse 42 die Raststege 40 radial nach außen gespreizt werden. Die Rastansätze 41 und der Ringansatz 44 sind derart zueinander dimensioniert, dass die Rastansätze 41 einen axialen Anschlag für den Ringansatz 44 darstellen. Hierzu weisen beide Teile senkrecht zur Längsmittelachse Y₁-Y₁ verlaufende, einander zugekehrte Anschlagflächen 50a, 50b auf. Diese erfindungsgemäße Ausbildung von dem Anschlusszapfen 37 und der Anschlusshülse 42 ermöglicht eine axiale Relativverschiebung dieser Teile im Verbindungszustand zueinander. Hierbei wird der axiale Verschiebeweg durch die Länge der Raststege 40 bis zu den Rastansätzen 41 bestimmt. Hierbei kann beispielsweise ein Verschiebeweg von 20 mm und maximal von 50 bis 60 mm vorhanden sein, so dass ein entsprechender Längenausgleich vorhanden ist. Hierdurch wird die Crashsicherheit eines erfindungsgemäßen Steckverbinders 1 bzw. Anschlussverbinders 36 wesentlich erhöht. An dem der Anschlusshülse 42 gegenüberliegenden Ende des Anschlussverbinders 36 kann ein Anschlusszapfen oder eine Anschlusshülse für die Befestigung eines Fluidanschlusses ausgebildet sein. Innerhalb des Anschlussverbinders 36 kann ein ringförmiger Tiefenanschlag 45 für den Anschlusszapfen 37 ausgebildet sein.

Des Weiteren bezieht sich die Erfindung auf eine Steckkupplung aus einem Steckverbinder mit dem Gegensteckverbinder gemäß den Fig. 1, 9 oder 5, 9.

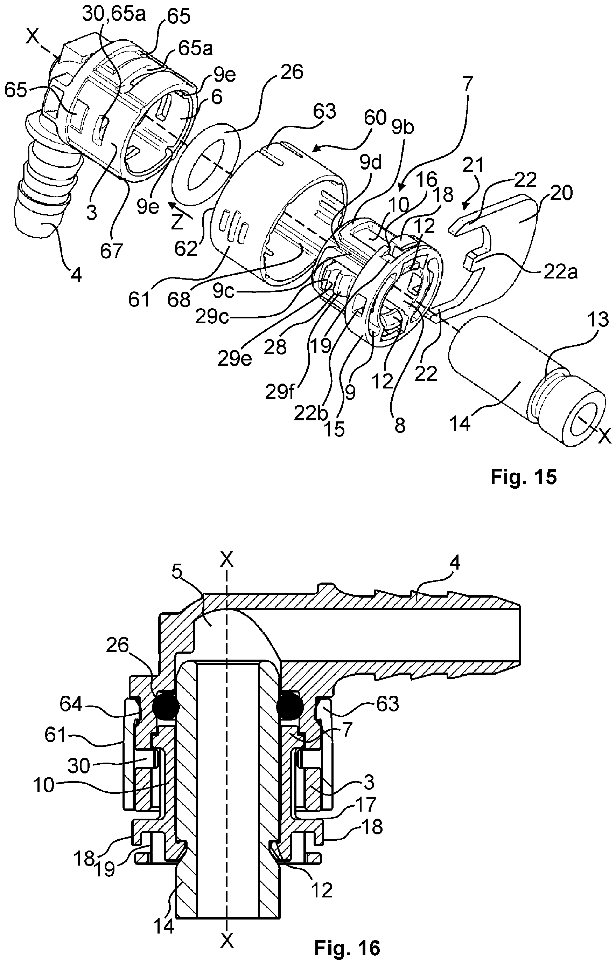

In den Fig. 15 bis 19 ist eine Ausführungsform eines erfindungsgemäßen Steckverbinders dargestellt.

Hierbei sind funktionsgleiche Teile wie in den vorhergehenden Figuren mit denselben Bezugsziffern versehen.

Die Adapterhülse 7 besitzt eine die Durchgangsöffnung 8 umfassende Hülsenwandung 9. In zwei einander diametral gegenüberliegenden Abschnitten sind in der Hülsenwandung 9 Rastmittel ausgebildet. Diese Rastmittel bestehen aus zwei in Bezug auf eine Längsmittelachse X-X der Adapterhülse 7 radialelastische Rastarme 10, die um 180 ° zueinander versetzt angeordnet sind. Diese Rastarme 10 verlaufen parallel zu der Längsmittelachse X-X und sind durch schlitzförmige Freischnitte 11 an ihren Längsseiten von der Hülsenwandung 9 getrennt. An ihrem in Einsteckrichtung Z vorderen Ende der Adapterhülse sind die Rastarme 10 an die Hülsenwandung 9 angebunden. Hierbei besitzen die Rastarme 10 eine geringere Dicke als die Wandstärke der Hülsenwandung 9, so dass zwischen dem Außenumfang der Hülsenwandung 9 und dem Rastarm 10 ein in Richtung auf die Längsmittelachse X-X verlaufende Stufenfläche 9a ausgebildet ist.

Bei der Ausführungsform gemäß Fig. 15 weisen die Rastarme 10 an ihren freien Enden radial, in Richtung auf die Längsmittelachse X-X ausgerichtete erste Rastnocken 12 auf. Diese ersten Rastnocken 12 rasten im in die Durchgangsöffnung 8 eingesteckten Zustand der Adapterhülse 7 in einer Rastnut 13 eines eingesteckten Gegensteckverbinders oder einsteckbaren Gegensteckverbinders 14 ein, siehe Fig. 15, 16. Diese Rastnocken 12 liegen außerhalb des Muffenabschnitts 3 im eingesteckten Zustand der Adapterhülse 7 in dem Muffenabschnitt 3. Wie in Fig. 16 dargestellt, besitzt die Durchgangsöffnung 8 über ihre gesamte Länge denselben Innendurchmesser, so dass eine durchgehende glatte, stufenfreie Innenwandung vorhanden ist. Diese geht insbesondere in eine Einführungsschrägfläche im Öffnungsbereich der Durchgangsöffnung 8 im in Einsteckrichtung Z hinten liegenden Öffnungsbereich über.

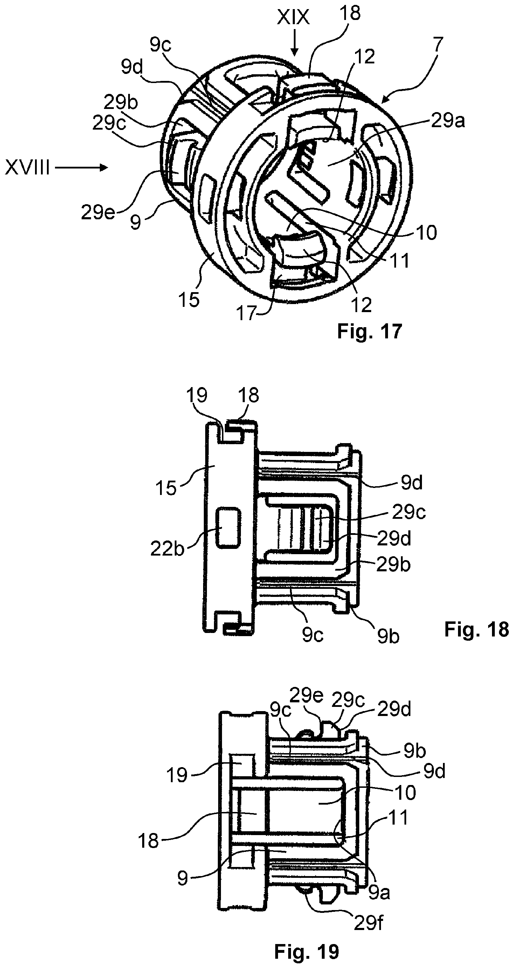

Es ist zweckmäßig, wenn die Adapterhülse 7 am Umfang ihrer Durchgangsöffnung 8, d. h. im in Einsteckrichtung Z gesehen hinten liegenden Öffnungsbereich, einen Ringkragen 15 aufweist. Dieser Ringkragen 15 verläuft radial gegenüber der Hülsenwandung 9 nach außen versetzt, so dass sein Außendurchmesser und sein Innendurchmesser insbesondere größer sind als der Außendurchmesser der Hülsenwandung 9. Zweckmäßigerweise ist der Außendurchmesser des Ringkragens 15 gleich groß wie der des Muffenabschnitts 3, wie in Fig. 17 zu erkennen ist, kann es zweckmäßig sein, wenn am in Einsteckrichtung Z vorderen Ende der Adapterhülse 7 durch eine Durchmesserreduzierung eine Ringstufe 9b ausgebildet ist. Ausgehend von dieser Ringstufe 9b erstrecken sich am Umfang der Adapterhülse 7 parallel zur Längsmittelachse X-X verlaufende Führungsnuten 9c, deren Nutgrund auf demselben Radius um die Längsmittelachse X-X liegt, wie der Umfang der Ringstufe 9b. Die Führungsnuten 9c weisen jeweils eine in sich trichterförmig in Einsteckrichtung Z erweiternde Einführungsöffnung 9d auf. Die Führungsnuten 9c dienen zur Führung von im Inneren des Kanalabschnitts 6 an seiner Innenwand ausgebildeten Führungsrippen 9e beim Einstecken der Adapterhülse 7 in den Kanalabschnitt 6, wobei die Adapterhülse 7 derart ausgerichtet wird, dass die Führungsrippen 9e in die Führungsnuten 9c eingeführt werden. Hierdurch ergibt sich eine lagerichtige Positionierung der Adapterhülse 7 im Kanalabschnitt 6.

Im dargestellten Ausführungsbeispiel ist die Adapterhülse 7 innerhalb des Muffenabschnitts 3 mittel Formschlusselementen in axialer und vorzugsweise auch umfangsgemäßer Richtung formschlüssig fixiert. Diese Formschlusselemente bestehen aus am Umfang der Adapterhülse 7 zwischen den Rastarmen 9, 10 ausgebildeten, radialelastischen Rastmitteln. Diese Rastmittel werden insbesondere aus zwei axial parallel zur Längsmittelachse X-X verlaufenden, radialelastisch biegbaren Armen 29a gebildet. Diese Arme 29a sind jeweils um 90 ° zueinander versetzt zu den Rastarmen 10 angeordnet. Erfindungsgemäß sind die Arme 29a durch einen U-förmigen Schlitz 29b von der Wand der Adapterhülse 7 getrennt und mit ihrem entgegen der Einsteckrichtung Z weisenden Ende mit der Wand der Adapterhülse 7 einstückig verbunden, siehe Fig. 17. An ihren freien Enden weisen die Arme 29a zweite Rastnocken 29c auf, die radial nach außen abstehen, und die eine in Einsteckrichtung Z weisende Schrägfläche 29d besitzen, sowie eine senkrecht zur Längsmittelachse X-X verlaufende Rastfläche 29e, die mit der Schrägfläche 29d an ihrem äußeren freien Ende einen spitzen Winkel einschließt. Ein Umfangskreis, auf dem die zweiten Rastnocken 29c mit ihren freien Enden liegen, besitzt einen Durchmesser, der größer als der Innendurchmesser des Kanalabschnitts 6 des Muffenabschnitts 3 und kleiner als der Außendurchmesser des Kanalabschnitts 6 ist. Es ist zweckmäßig, wenn im in Einsteckrichtung Z gesehen hinter den jeweiligen ersten Rastnocken 10 ein Versteifungsansatz 29f angeformt ist. Die Dicke der Arme 29 ist vorzugsweise kleiner als die Dicke der Wand der Adapterhülse 7. Über die Länge und die Dicke der Arme 29a kann die Federelastizität der Arme 29a eingestellt werden.

Die zweiten Rastnocken 29c korrespondieren mit Ausnehmungen 30 in der Umfangswand des Muffenabschnitts 3 derart, dass im eingesteckten Zustand der Adapterhülse 7 in den Muffenabschnitt 3 die zweiten Rastnocken 29c in die Ausnehmungen 30 formschlüssig einrasten. Die Ausnehmungen 30 sind vorteilhafterweise als Durchbrüche der Wandung des Muffenabschnitts 3 ausgebildet. Vorzugsweise sind vier jeweils um 90 ° zueinander versetzt angeordnete Ausnehmungen 30 in dem Muffenabschnitt 3 vorhanden. Die zweiten Rastnocken 29c sind insbesondere derart dimensioniert, dass ihre freien Enden im eingerasteten Zustand nicht aus den Durchbrüchen 30 herausragen. Indem vier um 90 ° zueinander versetzte Ausnehmungen 30 ausgebildet sind, kann die Adapterhülse 7 in um 90 ° zueinander verdrehte Positionen eingesteckt werden. Es liegt ebenfalls im Rahmen der Erfindung, wenn die Durchbrüche 30 als innere Vertiefungen ausgebildet sind, so dass die Umfangswandung des Muffenabschnitts 3 geschlossen ist.

Die zweiten Rastnocken 29c rasten mit ihren senkrecht zur Längsmittelachse X-X verlaufenden Rastflächen 29e ein, und die Ausnehmungen 30 weisen den Rastflächen 29e gegenüberliegende Anlageflächen auf, die ebenfalls senkrecht zur Längsmittelachse X-X verlaufen. Diese Ausbildung der gegenüberliegenden Flächen bedingt im eingerasteten Zustand einen Formschluss in axialer Richtung. Zweckmäßigerweisen sind die zweiten Rastnocken 29c und die Ausnehmungen 30 derart aneinander angepasst, dass im eingerasteten Zustand eine Verdrehung der Adapterhülse 7 nicht möglich ist.

An den Rastarmen 10 sind an deren freien Enden in Bezug auf die Längsmittelachse X-X radial nach außen abstehende, stegartige Betätigungsfortsätze 16 ausgebildet. Diese Betätigungsfortsätze 16 verlaufen durch radial verlaufende Ausschnitte 17, und zwar in Bezug auf die Längsmittelachse X-X, so dass der Ringkragen 15 durch diese Ausschnitte 17 unterbrochen ist. An ihren freien Enden besitzen die Betätigungsfortsätze 16 entgegen der Einsteckrichtung Z abgewinkelte Fortsätze 18, die parallel zur Längsmittelachse X-X verlaufen. Diese Fortsätze 18 verlaufen zweckmäßigerweise bündig zum Außenumfang des Ringkragens 15, so dass der radiale Abstand zur Längsmittelachse X-X der abgewinkelten Fortsätze 18 an ihrer Außenfläche, d. h. der Außendurchmesser der Fortsätze 18, gleich dem Außendurchmesser des Ringkragens 15 ist. Im Bereich der Fortsätze 18 sind in dem Ringkragen 15 tangential zur Durchgangsöffnung 8 der Adapterhülse 7 in radialer Richtung nach außen randoffene, im Querschnitt U-förmige Führungsnuten bzw. Ausschnitte 19 ausgebildet, so dass diese sekantenförmig verlaufen. Die Fortsätze 18 und die Führungsnuten bzw. Führungsausschnitte 19 bilden eine Durchstecköffnung für ein Lösewerkzeug 20. Dieses Lösewerkzeug 20 besitzt z. B. einen gabelförmigen Endabschnitt 21 mit zwei diametral gegenüberliegenden Gabelzinken 22. Der Abstand der Gabelzinken 22 entspricht dem radialen Abstand der Führungsnuten 19 im Bereich ihrer Bodenabschnitte. Die Breite der Gabelzinken 22 ist kleiner/gleich der Breite der Führungsnuten 19. Die Gabelzinken 22 besitzen an ihren freien Enden eine Höhe, die kleiner ist als der radiale Abstand der abgewinkelten Fortsätze 18 zum Bodenabschnitt der Führungsnuten 19. Von ihrem freien Ende aus nimmt die Höhe der Gabelzinken 22 stetig zu auf ein Höhenendmaß. Dies Höhenendmaß ist derart, dass durch Einführen der Gabelzinken 22 senkrecht zur Längsmittelachse X-X in die von den Fortsätzen 18 und den Führungsnuten 19 gebildeten Durchstecköffnungen die Rastarme 10 radial nach außen elastisch gebogen werden, und zwar derart, dass der radiale Abstand ihrer Rastnocken 12 größer ist als der Außendurchmesser eines Steckerschaftes 23 des Gegensteckverbinders 14. Befindet sich der Steckerschaft 23 im eingesteckten Zustand des Gegensteckverbinders 14 innerhalb der Adapterhülse 7, wobei die Rastnocken 12 in die Rastnut 13 des Gegensteckverbinders 14 eingerastet sind, kann durch Einstecken des Lösewerkzeuges 20 in die Führungsnuten 19 die Einraststellung der Rastnocken 12 aufgehoben und der Steckerschaft 23 aus der Adapterhülse 7 herausgezogen werden. Das Lösewerkzeug 20 besitzt vorteilhafterweise zwischen den Gabelzinken 22 einen parallel zu den Gabelzinken 22 verlaufenden Führungssteg 22a, der im eingeschobenen Zustand des Lösewerkzeugs 20 in einer Ausnehmung 22b in dem Ringkragen 15 geführt wird, so dass ein Verkanten des Lösewerkzeugs 20 verhindert wird. Vorzugsweise sind zwei einander gegenüberliegende Ausnehmungen 22b in dem Ringkragen vorgesehen.

Wie in den Fig. 15, 16 dargestellt ist, kann es zweckmäßig sein, wenn am Außenumfang des Muffenabschnitts 3 eine Lösesicherung 60 in Längsrichtung der Längsmittelachse X-X verschiebbar angeordnet ist. Diese Lösesicherung 60 ist zwischen zwei Stellungen, insbesondere Raststellungen, verschiebbar gelagert. Die erste Stellung ist eine Montagestellung, in der der Gegensteckverbinder 40 in den erfindungsgemäßen Steckverbinder, und zwar in die Adapterhülse 7 eingesteckt werden kann bzw. eingesteckt ist, siehe Fig. 16. Die zweite Stellung ist eine Stellung, in der die Lösesicherung 60 in Richtung auf den Ringkragen 15 derart verschoben ist, dass die Lösesicherung 60 eine radiale Spreizung der Rastarme 10 verhindert.

Vorteilhafterweise besteht gemäß dem dargestellten vorteilhaften Ausführungsbeispiel die Lösesicherung 60 aus einer den Muffenabschnitt 3 formschlüssig umfassenden Hülse 61. Diese Hülse 61 ist auf dem Muffenabschnitt 3 verschiebbar gelagert, und zwar zwischen den vorbeschriebenen beiden Stellungen. In der ersten Stellung befindet sich die Hülse 61 vollständig auf dem Muffenabschnitt 3, siehe Fig. 16, so dass der Ringkragen 15 frei zugänglich ist und eine Spreizung der Rastarme 10 mittels des Lösewerkzeuges 20 möglich ist, so dass die Rastarme 10 beim Einstecken des Gegensteckverbinders 14 radial gespreizt werden können. In dieser Stellung rastet die Hülse 61 z. B. mit an ihrem Umfang 62 ausgebildeten Rastzungen 63 mit endseitigen Rastansätzen 64 kraftformschlüssig, d. h. lösbar in eine Ausnehmung bzw. an einer Stufe 65 in der Umfangswand des Muffenabschnitts 3 ein. Die Verschiebekraft der Hülse 61 gegen die Einsteckrichtung Z ist größer als die Einführkraft des Gegensteckverbinders 14 in die Adapterhülse 7. Vorteilhafterweise sind zwei um 180 ° zueinander versetzte Rastzungen 63 und zwei um 90 ° versetzte Ausnehmungen 65 bzw. Stufen 65 vorhanden. In der zweiten Stellung, wobei es sich ebenfalls um eine lösbare Raststellung handelt, umfasst die Hülse 61 auch den Ringkragen 15. Hierdurch ist eine Spreizung der Rastarme 10 nicht mehr möglich, so dass hierdurch ein ungewolltes Lösen der erfindungsgemäßen Steckverbindung im eingesteckten Zustand des Gegensteckverbinders 14 verhindert wird. In dieser zweiten Raststellung rastet die Hülse 61 mit ihren Rastzungen 63 in der Umfangswand des Muffenabschnitts 3 in dort vorhandene Ausnehmungen 65a kraftformschlüssig, d. h. lösbar ein, die mit den Ausnehmungen 30 zusammenfallen können.

An dem Außenumfang des Muffenabschnitts 3 sind zweckmäßigerweise vier um 90 ° zueinander versetzt angeordnete Längsrippen 67 ausgeformt. Die Hülse 61 besitzt in Anpassung hieran in ihrer Hülsenwandung Führungsnuten 68 zur Aufnahme der Längsrippen 67. Hierdurch erfolgt ein lagerichtiges Aufstecken der Hülse 61 auf den Muffenabschnitt 3, wenn die Adapterhülse 7 noch nicht in den Muffenabschnitt 3 eingesteckt ist.

### Bezugszeichenliste

- 1: Steckverbinder
- 2: Gehäuse
- 3: Muffenabschnitt
- 4: Steckabschnitt
- 5: Durchgangskanal
- 6: Kanalabschnitt
- 6a: Abschnitt des Kanalabschnitts
- 7: Adapterhülse
- 8: Durchgangsöffnung
- 9: Hülsenwandung
- 9a: Stufenfläche
- 9b: Ringstufe
- 9c: Führungsnuten
- 9d: Einführungsöffnung
- 9e: Führungsrippen
- 10: Rastarme
- 11: Freischnitte
- 12: Erste Rastnocken
- 13: Rastnut
- 14: Gegensteckverbinder
- 15: Ringkragen
- 15a: Ringkragen Fig. 5-10
- 16: Betätigungsfortsätze
- 17: Ausschnitte
- 18: Fortsätze von 16
- 19: Führungsnuten
- 20: Lösewerkzeug
- 21: gabelförmiger Endabschnitt
- 22: Gabelzinken
- 22a: Führungssteg
- 22b: Ausnehmung
- 23: Steckerschaft
- 24: Anschlussabschnitt
- 25: Ringbund
- 26: Umfangsdichtung
- 27: Ringschulter
- 27a: Anlagefläche
- 27b: Anschlagfläche
- 28: Formschlusselemente
- 29: Rastzungen
- 29a: Arme
- 29b: Schlitz
- 29c: Zweite Rastnocken
- 29d: Schrägflächen
- 29e: Rastflächen
- 29f: Versteifungsansatz
- 30: Ausnehmungen
- 32: Spalt
- 33: Verformungsabschnitte
- 34: Fluidkanal
- 35: Rastnut des Gegensteckverb.
- 36: Anschlussverbinder
- 37: Anschlusszapfen
- 38: Innerer Fluidkanal
- 39: Umfangsdichtung des Anschlusszapfens
- 40: Raststege
- 41: Rastansätze
- 42: Anschlusshülse
- 43: Anschlussverbinder
- 44: Ringansatz
- 45: Tiefenanschlag
- 60: Lösesicherung
- 61: Hülse
- 62: Umfang von 61
- 63: Rastzungen
- 64: Rastansätze
- 65: Ausnehmungen
- 65a: Ausnehmungen
- 67: Längsrippen
- 68: Führungsnuten

- Z: Einsteckrichtung
- X-X: Längsmittelachse
- Y-Y: Längsmittelachse

## Patentansprüche

1. Steckverbinder (1) zum Verbinden von mindestens einer Fluidleitung mit einer anderen Fluidleitung oder einem Aggregatanschluss, umfassend ein Gehäuse (2) mit einem Durchgangskanal (5), wobei ein Ende des Gehäuses (2) als Muffenabschnitt (3) zum Einstecken eines Gegensteckverbinders (14) ausgebildet ist und Rastmittel (10, 12) zum lösbaren Fixieren des Gegensteckverbinders (14) aufweist, wobei die Rastmittel (10, 12) Bestandteil einer in den Muffenabschnitt (3) steckbaren Adapterhülse (7) sind, die im Muffenabschnitt (3) mittels Formschlusselementen (28) gehalten ist, und eine Durchgangsöffnung (8) für einen Steckerschaft (23) des Gegensteckverbinders (14) aufweist, sowie die Rastmittel aus mindestens zwei in Bezug auf eine Längsmittelachse (X-X) der Adapterhülse (7) radial elastischen Rastarmen (10) gebildet sind, wobei die Rastarme (10) am im eingesteckten Zustand innerhalb des Muffenabschnitts (3) liegenden Ende der Adapterhülse (7) angeformt sind und die Rastarme (10) an ihrem freien Ende radial in Richtung auf die Längsmittelachse (X-X) verlaufende erste Rastnocken (12) aufweisen, wobei die Formschlusselemente (28) aus jeweils parallel zur Längsmittelachse (X-X) verlaufenden, radialelastisch verbiegbaren Armen (29a) gebildet sind, die diametral gegenüberliegen und zu den Rastarmen (10) um 90 ° versetzt sind und an ihren freien in Einsteckrichtung (Z) weisenden Enden radial nach außen abstehende zweite Rastnocken (29c) aufweisen,
**dadurch gekennzeichnet, dass** die Rastarme (10) parallel zur Längsmittelachse (X-X) verlaufen und am Umfang der Adapterhülse (7) durch schlitzförmige Freischnitte (11) in deren Hülsenwandung ausgebildet sind, wobei die Arme (29a) durch einen U-förmigen Schlitz (29b) von der Wandung der Adapterhülse (7) getrennt sind und mit der Wandung der Adapterhülse (7) mit ihrem entgegen der Einsteckrichtung (Z) weisenden Ende einstückig verbunden sind.

2. Steckverbinder (1) nach Anspruch 1,
**dadurch gekennzeichnet, dass** die zweiten Rastnocken (29c) der Arme (29a) jeweils eine in Einsteckrichtung (Z) weisende Schrägfläche (29d) und eine entgegen der Einsteckrichtung (Z) weisende, senkrecht zur Längsmittelachse (X-X) verlaufende Rastfläche (29e) aufweisen.

3. Steckverbinder (1) nach Anspruch 1 oder 2,
**dadurch gekennzeichnet, dass** die zweiten Rastnocken (29c) der Arme (29a) mit ihren freien Enden auf einem Umfangskreis liegen, dessen Durchmesser kleiner ist als der Außendurchmesser des Muffenabschnitts (3) und größer ist als der Innendurchmesser des Kanalabschnitts (6) des Muffenabschnitts (3).

4. Steckverbinder (1) nach einem der Ansprüche 1 bis 3,
**dadurch gekennzeichnet, dass** die Dicke der Rastarme (10) geringer ist als die Wandstärke der Adapterhülse (7), so dass zwischen dem Außenumfang der Wandung der Adapterhülse (7) und den Rastarmen (10) eine radial in Richtung auf die Längsmittelachse (X-X) verlaufende Stufenfläche (9a) ausgebildet ist.

5. Steckverbinder (1) nach Anspruch 4,
**dadurch gekennzeichnet, dass** die radiale Höhe der Stufenfläche (9a) und die Länge der Rastarme (10) innerhalb des Muffenabschnitts (3) derart bemessen sind, dass ein radial nach außen gerichteter Federweg der ersten Rastnocken (12) derart gegeben ist, dass der radiale Abstand der radial nach außen gespreizten ersten Rastnocken (12) zur Längsmittelachse (X-X) zumindest gleich dem Innenradius der Durchgangsöffnung (8) der Adapterhülse (7) und zumindest gleich dem Außenradius des Steckerschaftes (14a) des Gegensteckverbinders (14) ist.

6. Steckverbinder (1) nach einem der Ansprüche 1 bis 5,
**dadurch gekennzeichnet, dass** die Formschlusselemente (28) in Umfangsrichtung der Adapterhülse (7) formschlüssig in Ausnehmungen (30) der Umfangswandung des Muffenabschnitts (3) fixiert sind, wobei insbesondere vier um 90° zueinander versetzte Ausnehmungen (30) ausgebildet sind.

7. Steckverbinder (1) nach einem der Ansprüche 1 bis 6,
**dadurch gekennzeichnet, dass** die Adapterhülse (7) einen am Umfang ihrer Durchgangsöffnung (8) an ihrem in Einsteckrichtung (z) gesehen hinteren Öffnungsrand verlaufenden Ringkragen (15) aufweist, der im eingesteckten Zustand der Adapterhülse (7) außerhalb des Muffenabschnitts (3) angeordnet ist, und die ersten Rastnocken (12) ebenfalls außerhalb des Muffenabschnitts (3) verlaufen.

8. Steckverbinder (1) nach Anspruch 7,
**dadurch gekennzeichnet, dass** der Ringkragen (15) kreisförmig umfangsgemäß ausgebildet ist und sein Außendurchmesser kleiner oder gleich groß ist wie ein Außendurchmesser einer kreisförmigen Umfangskontur des Muffenabschnitts (3) bzw. eines Außendurchmessers des Muffenabschnitts (3).

9. Steckverbinder (1) nach einem der Ansprüche 1 bis 8,
**dadurch gekennzeichnet, dass** um 180° zueinander versetzte Rastarme (10) ausgebildet sind sowie an den freien Enden der Rastarme (10) in Bezug auf die Längsmittelachse (X-X) radial nach außen abstehende Betätigungsfortsätze (16) gebildet sind.

10. Steckverbinder (1) nach Anspruch 9,
**dadurch gekennzeichnet, dass** im Bereich der Betätigungsfortsätze (16) am Ringkragen (15) tangential zur Durchgangsöffnung (8) der Adapterhülse (7) verlaufende, randoffene Führungsnuten (19) bzw. Durchbrüche (19) sekantenartig ausgebildet sind, wobei der Ringkragen (15) durch die Betätigungsfortsätze (16) unterbrochen ist, und die Betätigungsfortsätze (16) jeweils einen parallel zur Längsmittelachse (X-X) außerhalb der jeweiligen Führungsnut (19) verlaufenden, entgegen der Einsteckrichtung (Z) abgewinkelten Fortsatz (18) aufweisen, so dass zwischen den Fortsätzen (18) und den Führungsnuten (19) eine zum Einführen eines Lösewerkzeugs (20) geeignete Durchstecköffnung ausgebildet ist.

11. Steckverbinder (1) nach einem der Ansprüche 7 bis 10 ,
**dadurch gekennzeichnet, dass** der Ringkragen (15a) von der Adapterhülse (7) durch umfangsgemäße Spaltabschnitte zwischen den Rastarmen (10) getrennt ist und die Rastarme (10) im Bereich der ersten Rastnocken (12) an deren Außenseite umgibt und mit diesen in diesem Bereich verbunden ist, und der Ringkragen (15a) mittig zwischen den Rastarmen (10) Verformungsabschnitte (33) aufweist, die unter einer radial zur Längsmittelachse (X-X) gerichteten Kraft derart verformbar sind, dass eine radial nach außen gerichtete Spreizung der Rastarme (10) derart erzeugt wird, dass die ersten Rastnocken (12) ihre Lösestellung einnehmen.

12. Steckverbinder (1) nach Anspruch 1 0,**dadurch gekennzeichnet, dass** der radiale Abstand der abgewinkelten Fortsätze (18) der Betätigungsfortsätze (16) an deren Außenflächen gleich einem Außendurchmesser des Ringkragens (15) ist.

13. Steckverbinder (1) nach Anspruch 12,
**dadurch gekennzeichnet, dass** ein Außendurchmesser des Ringkragens (15a) im Bereich der ersten Rastnocken (12) gleich dem Außendurchmesser des Muffenabschnitts (3) ist.

14. Steckverbinder (1) nach einem der Ansprüche 1 bis 13,
**dadurch gekennzeichnet, dass** in Einsteckrichtung (Z) vor der Adapterhülse (7) in der Durchgangsöffnung (8) des Muffenabschnitts (3) eine Umfangsdichtung (26) angeordnet ist zum Abdichten eines Umfangsspaltes zwischen einer Innenwandung des Muffenabschnitts (3) und dem Steckerschaft (23) eines Gegensteckverbinders (14).

15. Steckverbinder (1) nach einem der Ansprüche 1 bis 14,
**dadurch gekennzeichnet, dass** am Außenumfang des Muffenabschnitts (3) eine Lösesicherung (60) in Längsrichtung (X-X) zwischen zwei Raststellungen verschiebbar angeordnet ist, wobei die Lösesicherung (60) in ihrer auf dem Ringkragen (15) verschobenen zweiten Raststellung eine Spreizung der Rastarme (10) verhindert und in ihrer anderen Raststellung die Rastarme (10) spreizbar sind.

16. Steckverbinder (1) nach Anspruch 15,
**dadurch gekennzeichnet, dass** die Lösesicherung (60) aus einer den Muffenabschnitt (3) umfassenden Hülse (61) besteht, die an ihrem in Einsteckrichtung (Z) weisenden Umfangsrand (62) Rastzungen (63) aufweist, die in der jeweiligen Raststellung in Ausnehmungen (65) der Umfangswand des Muffenabschnitts (3) einrasten.

17. Steckverbinder (1) nach Anspruch 16,
**dadurch gekennzeichnet, dass** die Hülse (61) in ihrer die Spreizung der Rastarme (10) blockierenden Raststellung den Ringkragen (15) sowie die Fortsätze (18) umfasst.

18. Steckverbinder (1) nach einem der Ansprüche 14 bis 17, **dadurch gekennzeichnet, dass** in dem Muffenabschnitt (3) am Übergang eines im Durchmesser erweiterten Kanalabschnitts (6) des Muffenabschnitts (3) zum Durchgangskanal (5) eine Ringschulter (27) zur Anlage der Umfangsdichtung (26) zum Abdichten der Umfangsspalte ausgebildet ist und die Umfangsdichtung (26) zwischen der Ringschulter (27) und einer Stirnendfläche der Adapterhülse (7) eingekammert ist.

19. Steckverbinder (1) nach einem der Ansprüche 1 bis 18,
**dadurch gekennzeichnet, dass** das Gehäuse (2) an seinem dem Muffenabschnitt (3) gegenüberliegenden Ende einen Anschlusszapfen (37) aufweist, der an seinem freien Ende eine Umfangsdichtung (39) besitzt sowie an dem dem freien Ende gegenüberliegenden Bereich des Anschlusszapfens (37) mehrere in Richtung auf das freie Ende sich erstreckende, parallel zur Längsmittelachse (Y-Y) verlaufende Raststege (40) angeordnet sind, die an ihren Enden radial in Bezug auf die Längsmittelachse (Y-Y) nach innen gerichtete Rastansätze (41) besitzen.

20. Steckverbinder (1) nach Anspruch 19,
**dadurch gekennzeichnet, dass** zwischen den Raststegen (40) und dem Anschlusszapfen (37) ein Führungsspalt ausgebildet ist, in den eine Anschlusshülse (42) einschiebbar ist, die eine Durchgangsbohrung zur Aufnahme des Anschlusszapfens (37) besitzt, sowie einen radial nach außen in Bezug auf die Längsmittelachse (Y-Y) abstehenden Ringeinsatz aufweist, der im aufgeschobenen Zustand der Anschlusshülse (42) innerhalb des Führungsspaltes zwischen den Rastansätzen (41) und dem gegenüberliegenden Ende der Raststege (40) verschiebbar ist.

21. Steckverbinder (1) nach einem der Ansprüche 1 bis 20,
**dadurch gekennzeichnet, dass** in Einsteckrichtung (Z) am vorderen Ende der Adapterhülse (7) eine Ringstufe (9b) durch eine Durchmesserreduzierung der Adapterhülse (7) ausgebildet ist und sich ausgehend von dieser Ringstufe (9b) am Umfang der Adapterhülse (7) parallel zur Längsmittelachse (X-X) verlaufende Führungsnuten (9c) ausgebildet sind, deren Nutgrund auf demselben Radius liegt wie der Umfang der Ringstufe (9b), wobei im eingesteckten Zustand der Adapterhülse (7) die Führungsnuten (9c) zur Aufnahme und Führung von Führungsrippen (9e) dienen, die am Innern des Kanalabschnitts (6) an seiner Innenwand ausgebildet sind.

22. Steckverbinder (1) nach Anspruch 21,
**dadurch gekennzeichnet, dass** die Ringstufe (9b) der Adapterhülse (7) eine radial zur Längsmittelachse (X-X) verlaufende, umlaufende Anlagefläche (27a) aufweist, und der Abschnitt (6a) des Kanalabschnitts (6) eine im Sinne einer Durchmesservergrößerung ausgebildete ringförmige Anschlagfläche (27b) besitzt, wobei im eingesteckten Zustand der Adapterhülse (7) diese mit ihrer Anlagefläche (27a) an der Anschlagfläche (27b) anliegt.

23. Steckkupplung bestehend aus einem Steckverbinder (1) gemäß einem der Ansprüche 1 bis 22 sowie einem Gegensteckverbinder (14) zum Einstecken in den Steckverbinder (1) mit einem Steckerschaft (23) und einer in Einsteckrichtung (Z) hinter dem Steckerschaft (23) ausgebildeten Rastnut (13),
**dadurch gekennzeichnet, dass** der Steckerschaft (23) derart dimensioniert ist, dass im eingesteckten Zustand sein freies Ende aus der Adapterhülse (7) herausragt und in dem Durchgangskanal (5) des Gehäuses (2) des Steckverbinders (1) endet und sein Außendurchmesser größer ist als der radiale Abstand der ersten Rastnocken (12) im nicht gespreizten Zustand.

24. Steckkupplung nach Anspruch 23,
**dadurch gekennzeichnet, dass** die Rastnut (13) derart angeordnet und ausgebildet ist, dass im eingesteckten Zustand des Steckerschaftes (23) die Haltearme (10) mit ihren ersten Rastnocken (12) in der Rastnut (13) formschlüssig einrasten.

25. Steckkupplung nach Anspruch 23 oder 24,
**dadurch gekennzeichnet, dass** die Rastnut (13) eine derartige axiale Erstreckung in Richtung der Einsteckrichtung (Z) aufweist, dass eine axiale Verschiebung des Steckerschaftes (23) im eingesteckten Zustand in der Adapterhülse (7) um einen bestimmten Verschiebeweg gegeben ist, und wobei die Länge des Steckerschaftes (23) zwischen der Rastnut (13) und seinem freien Ende derart bemessen ist, dass der Steckerschaft (23) um die Länge des axialen Verschiebeweges verlängert ist.

## Claims

1. Connector (1) for connecting at least one fluid line with another fluid line or to a unit connection, the connector comprising a housing (2) with a through-channel (5), one end of the housing (2) being formed as a sleeve section (3) for receiving a mating connector (14) and having latching means (10, 12) for releasably attaching the mating connector (14), the latching means (10, 12) being a component of an adapter sleeve (7) which can be inserted into the sleeve section (3) which is held in the sleeve section (3) by means of positive-locking elements (28), and has a through-opening (8) for a plug shank (23) of the mating connector (14), in which the latching means are formed from at least two latching arms (10) which are radially elastic with respect to a longitudinal central axis (X-X) of the adapter sleeve (7), the latching arms (10) being integrally formed on the end of the adapter sleeve (7) which is located inside the sleeve section (3) in the inserted state, and the latching arms (10) having first latching cams (12) at their free end which run radially in the direction of the longitudinal central axis (X-X), wherein the positive-locking elements (28) are formed from radially elastically bendable arms (29a) each extending parallel to the longitudinal central axis (X-X), which arms are diametrically opposite and offset by 90° relative to the latching arms (10) and have second latching cams (29c) projecting radially outwardly at their free ends pointing in the insertion direction (Z),
**characterized in that** the latching arms (10) run parallel to the longitudinal central axis (X-X) and are formed on the circumference of the adapter sleeve (7) by slot-shaped cutouts (11) in the sleeve wall thereof, the arms (29a) being separated from the wall of the adapter sleeve (7) by a U-shaped slot (29b) and being integrally connected to the wall of the adapter sleeve (7) with its end pointing against the insertion direction (Z).

2. Connector (1) according to claim 1,
**characterized in that** the second latching cams (29c) of the arms (29a) each have an oblique surface (29d) pointing in the insertion direction (Z) and a latching surface (29e) facing against the insertion direction (Z) and extending vertically to the longitudinal central axis (X-X).

3. Connector (1) according to claim 1 or 2,
**characterized in that** the second latching cams (29c) of the arms (29a) lie with their free ends on a circumferential circle whose diameter is smaller than the outer diameter of the sleeve section (3) and larger than the inner diameter of the channel section (6) of the sleeve section (3).

4. Connector (1) according to any one of claims 1 to 3,
**characterized in that** the thickness of the latching arms (10) is less than the wall thickness of the adapter sleeve (7), so that a stepped surface (9a) extending radially in the direction of the longitudinal central axis (X-X) is formed between the outer circumference of the wall of the adapter sleeve (7) and the latching arms (10).

5. Connector (1) according to claim 4,
**characterized in that** the radial height of the stepped surface (9a) and the length of the latching arms (10) within the sleeve section (3) are dimensioned in such a way that a radially outwardly directed spring path of the first latching cams (12) is provided in such a way that the radial distance of the radially outwardly spread first latching cams (12) from the longitudinal central axis (X-X) is at least equal to the inner radius of the through-opening (8) of the adapter sleeve (7) and at least equal to the outer radius of the plug shank (14a) of the mating connector (14).

6. Connector (1) according to any one of claims 1 to 5,
**characterized in that** the positive-locking elements (28) are positively fixed in the circumferential direction of the adapter sleeve (7) in recesses (30) of the circumferential wall of the sleeve section (3), in particular four recesses (30) offset by 90° to one another being formed.

7. Connector (1) according to any one of claims 1 to 6,
**characterized in that** the adapter sleeve (7) has an annular collar (15) running around the circumference of its through-opening (8) at its rear opening edge as viewed in the insertion direction (Z), which annular collar (15) is arranged outside the sleeve section (3) when the adapter sleeve (7) is inserted, and the first latching cams (12) also run outside the sleeve section (3).

8. Connector (1) according to claim 7,
**characterized in that** the annular collar (15) is circularly circumferentially formed and its outer diameter is smaller than or equal to an outer diameter of a circular circumferential contour of the sleeve section (3) respectively an outer diameter of the sleeve section (3).

9. Connector (1) according to any one of claims 1 to 8,
**characterized in that** latching arms (10) offset by 180° with respect to one another are formed and actuating extensions (16) projecting radially outwardly with respect to the longitudinal central axis (X-X) are formed at the free ends of the latching arms (10).

10. Connector (1) according to claim 9,
**characterized in that in** the region of the actuating extensions (16) on the annular collar (15), open-edge guide grooves (19) respectively openings (19) are formed tangentially to the through-opening (8) of the adapter sleeve (7), in which the annular collar (15) being interrupted by the actuating extensions (16), and the actuating extensions (16) each having an extension (18) which runs parallel to the longitudinal central axis (X-X) outside the respective guide groove (19) and is angled counter to the insertion direction (Z), so that an insertion opening suitable for the introduction of a release tool (20) is formed between the extensions (18) and the guide grooves (19).

11. Connector (1) according to any one of claims 7 to 10,
**characterized in that** the annular collar (15a) is separated from the adapter sleeve (7) by circumferential gap sections between the latching arms (10) and surrounds the latching arms (10) in the region of the first latching cams (12) on the outer side thereof and is connected thereto in this region, and the annular collar (15a) has deformation sections (33) centrally between the latching arms (10) which are deformable under a force directed radially to the longitudinal central axis (X-X) in such a way that a radially outwardly directed spreading of the latching arms (10) is produced in such a way that the first latching cams (12) assume their release position.

12. Connector (1) according to claim 10,
**characterized in that** the radial distance of the angled extensions (18) of the actuating extensions (16) at their outer surfaces is equal to an outer diameter of the annular collar (15).

13. Connector (1) according to claim 12,
**characterized in that** an outer diameter of the annular collar (15a) in the region of the first latching cams (12) is equal to the outer diameter of the sleeve section (3).

14. Connector (1) according to any one of claims 1 to 13,
**characterized in that** a circumferential seal (26) is arranged in front of the adapter sleeve (7) in the through-opening (8) of the sleeve section (3) in the insertion direction (Z) for sealing a circumferential gap between an inner wall of the sleeve section (3) and the plug shank (23) of a mating connector (14).

15. Connector (1) according to any one of claims 1 to 14,
**characterized in that on** the outer circumference of the sleeve section (3) a release lock (60) is arranged slideably in the longitudinal direction (X-X) between two locking positions, wherein the release lock (60) in its second locking position slid on the annular collar (15) prevents spreading of the latching arms (10) and in its other locking position the latching arms (10) can be spread.

16. Connector (1) according to claim 15,
**characterized in that** the release lock (60) consists of a sleeve (61) which surrounds the sleeve section (3) and has, on its circumferential edge (62) pointing in the insertion direction (Z), latching tongues (63) which, in the respective latching position, latch into recesses (65) in the circumferential wall of the sleeve section (3).

17. Connector (1) according to claim 16,
**characterized in that** the sleeve (61) in its locking position blocking the spreading of the latching arms (10) surrounds the annular collar (15) as well as the extensions (18).

18. Connector (1) according to any one of claims 14 to 17,
**characterized in that an** annular shoulder (27) is formed in the sleeve section (3) at the transition of a channel section (6) of the sleeve section (3), which is enlarged in diameter, to the through-channel (5) for abutment of the circumferential seal (26) for sealing the circumferential gaps, and the circumferential seal (26) is chambered between the annular shoulder (27) and an front end surface of the adapter sleeve (7).

19. Connector (1) according to any one of claims 1 to 18,
**characterized in that** the housing (2) has, at its end opposite the sleeve section (3), a connecting pin (37) which has a circumferential seal (39) at its free end, and a plurality of latching webs (40) are arranged on the region of the connecting pin (37) opposite the free end, which latching webs extend in the direction of the free end, run parallel to the longitudinal central axis (Y-Y) and have, at their ends, latching projections (41) which are directed radially inwards with respect to the longitudinal central axis (Y-Y).

20. Connector (1) according to claim 19,
**characterized in that a** guide slot is formed between the latching web (40) and the connecting pin (37), into which guide slot a connecting sleeve (42) can be inserted which has a through-bore for receiving the connecting pin (37), and a ring insert projecting radially outwardly with respect to the longitudinal central axis (Y-Y), which ring insert, in the pushed-on state of the connecting sleeve (42), is displaceable within the guide slot between the latching projection (41) and the opposite end of the latching webs (40).

21. Connector (1) according to any one of claims 1 to 20,
**characterized in that** an annular step (9b) is formed in the insertion direction (Z) at the front end of the adapter sleeve (7) by a diameter reduction of the adapter sleeve (7), and guide grooves (9c) are formed starting from this annular step (9b) on the circumference of the adapter sleeve (7) and running parallel to the longitudinal central axis (X-X), the groove base of which lies on the same radius as the circumference of the annular step (9b), wherein in the inserted state of the adapter sleeve (7) the guide grooves (9c) serve to receive and guide guide ribs (9e) which are formed on the inside of the channel section (6) on its inner wall.

22. Connector (1) according to claim 21,
**characterized in that** the annular step (9b) of the adapter sleeve (7) has a circumferential contact surface (27a) extending radially with respect to the longitudinal central axis (X-X), and the section (6a) of the channel section (6) has an annular stop surface (27b) formed in the sense of an enlargement of the diameter, wherein in the inserted state of the adapter sleeve (7) the latter abuts with its contact surface (27a) against the stop surface (27b).

23. Plug-in coupling consisting of a connector (1) according to one of the claims 1 to 22 as well as a mating connector (14) for plugging into the connector (1) with a plug shank (23) and a latching groove (13) formed behind the plug shank (23) in the insertion direction (Z),
**characterized in that** the plug shank (23) is dimensioned in such a way that, in the plugged-in state, its free end projects out of the adapter sleeve (7) and ends in the through-channel (5) of the housing (2) of the connector (1), and its outer diameter is greater than the radial distance of the first latching cams (12) in the non-spread state.

24. Plug-in coupling according to claim 23,
**characterized in that** the latching groove (13) is arranged and formed in such a way that, when the plug shank (23) is inserted, the latching arms (10) engage with their first latching cams (12) in the latching groove (13) in a form-fitting manner.

25. Plug-in coupling according to claim 23 or 24,
**characterized in that** the latching groove (13) has such an axial extension in the direction of the insertion direction (Z) that an axial displacement of the plug shank (23) in the inserted state in the adapter sleeve (7) is given along a certain displacement path, and wherein the length of the plug shank (23) between the latching groove (13) and its free end is dimensioned such that the plug shank (23) is extended by the length of the axial displacement path.

## Revendications

1. Connecteur enfichable (1) servant à la connexion d'au moins une conduite de fluide à une autre conduite de fluide ou à un raccordement d'unité, comportant un boîtier (2) doté d'un canal de passage (5), une extrémité du boîtier (2) étant réalisée sous forme de partie de manchon (3) servant à l'enfichage d'un connecteur enfichable conjugué (14) et présentant des moyens d'encliquetage (10, 12) pour la fixation amovible du connecteur enfichable conjugué (14), les moyens d'encliquetage (10, 12) faisant partie d'une douille d'adaptation (7) pouvant être enfichée dans la partie de manchon (3), laquelle douille d'adaptation est retenue dans la partie de manchon (3) au moyen d'éléments d'engagement par complémentarité de formes (28), et présentant une ouverture de passage (8) pour une tige de connecteur (23) du connecteur enfichable conjugué (14), et les moyens d'encliquetage étant formés à partir d'au moins deux bras d'encliquetage (10) radialement élastiques par rapport à un axe médian longitudinal (X-X) de la douille d'adaptation (7), les bras d'encliquetage (10) étant moulés sur l'extrémité de la douille d'adaptation (7) située à l'intérieur de la partie de manchon (3) dans l'état enfiché et les bras d'encliquetage (10) présentant à leur extrémité libre des premières cames d'encliquetage (12) s'étendant radialement en direction de l'axe médian longitudinal (X-X), les éléments d'engagement par complémentarité de formes (28) étant formés à partir de bras (29a) déformables de manière radialement élastique et s'étendant respectivement parallèlement à l'axe médian longitudinal (X-X), lesquels bras sont diamétralement opposés et sont décalés de 90° par rapport aux bras d'encliquetage (10) et présentent à leurs extrémités libres orientées dans le sens d'enfichage (Z) des deuxièmes cames d'encliquetage (29c) faisant saillie radialement vers l'extérieur,
**caractérisé en ce que** les bras d'encliquetage (10) s'étendent parallèlement à l'axe médian longitudinal (X-X) et sont formés à la périphérie de la douille d'adaptation (7) par des découpes (11) en forme de fentes dans sa paroi de douille, les bras (29a) étant séparés de la paroi de la douille d'adaptation (7) par une fente (29b) en forme de U et étant connectés d'une seule pièce à la paroi de la douille d'adaptation (7) par leur extrémité orientée en sens inverse du sens d'enfichage (Z) .

2. Connecteur enfichable (1) selon la revendication 1, **caractérisé en ce que** les deuxièmes cames d'encliquetage (29c) des bras (29a) présentent respectivement une surface inclinée (29d) orientée dans le sens d'enfichage (Z) et une surface d'encliquetage (29e) orientée en sens inverse du sens d'enfichage (Z) et s'étendant perpendiculairement à l'axe médian longitudinal (X-X).

3. Connecteur enfichable (1) selon la revendication 1 ou 2,
**caractérisé en ce que** les deuxièmes cames d'encliquetage (29c) des bras (29a) se situent par leurs extrémités libres sur un cercle périphérique dont le diamètre est inférieur au diamètre extérieur de la partie de manchon (3) et supérieur au diamètre intérieur de la partie de canal (6) de la partie de manchon (3).

4. Connecteur enfichable (1) selon l'une des revendications 1 à 3,
**caractérisé en ce que** l'épaisseur des bras d'encliquetage (10) est inférieure à l'épaisseur de paroi de la douille d'adaptation (7), de sorte qu'une surface étagée (9a) s'étendant radialement en direction de l'axe médian longitudinal (X-X) soit formée entre la périphérie extérieure de la paroi de la douille d'adaptation (7) et les bras d'encliquetage (10).

5. Connecteur enfichable (1) selon la revendication 4, **caractérisé en ce que** la hauteur radiale de la surface étagée (9a) et la longueur des bras d'encliquetage (10) à l'intérieur de la partie de manchon (3) sont dimensionnées de telle sorte qu'un débattement, orienté radialement vers l'extérieur, des premières cames d'encliquetage (12) soit défini de telle sorte que la distance radiale des premières cames d'encliquetage (12) écartées radialement vers l'extérieur par rapport à l'axe médian longitudinal (X-X) soit au moins égale au diamètre intérieur de l'ouverture de passage (8) de la douille d'adaptation (7) et au moins égale au diamètre extérieur de la tige de connecteur (14a) du connecteur enfichable conjugué (14).

6. Connecteur enfichable (1) selon l'une des revendications 1 à 5,
**caractérisé en ce que** les éléments d'engagement par complémentarité de formes (28) sont fixés par complémentarité de formes dans des évidements (30) de la paroi périphérique de la partie de manchon (3) dans la direction périphérique de la douille d'adaptation (7), en particulier quatre évidements (30) décalés les uns par rapport aux autres de 90° étant formés.

7. Connecteur enfichable (1) selon l'une des revendications 1 à 6,
**caractérisé en ce que** la douille d'adaptation (7) présente une collerette annulaire (15) s'étendant à la périphérie de son ouverture de passage (8) au niveau de son bord d'ouverture arrière vu dans le sens d'enfichage (Z), laquelle collerette annulaire est disposée à l'extérieur de la partie de manchon (3) dans l'état enfiché de la douille d'adaptation (7), et les premières cames d'encliquetage (12) s'étendent également à l'extérieur de la partie de manchon (3).

8. Connecteur enfichable (1) selon la revendication 7, **caractérisé en ce que** la collerette annulaire (15) est circulaire sur sa périphérie et son diamètre extérieur est inférieur ou égal à un diamètre extérieur d'un contour périphérique circulaire de la partie de manchon (3) respectivement à un diamètre extérieur de la partie de manchon (3).

9. Connecteur enfichable (1) selon l'une des revendications 1 à 8,
**caractérisé en ce que** des bras d'encliquetage (10) décalés de 180° l'un par rapport à l'autre sont formés et des saillies d'actionnement (16) faisant saillie radialement vers l'extérieur par rapport à l'axe médian longitudinal (X-X) sont formées aux extrémités libres des bras d'encliquetage (10).

10. Connecteur enfichable (1) selon la revendication 9, **caractérisé en ce que**, dans la région des saillies d'actionnement (16), des rainures de guidage (19) respectivement des orifices (19) à bord ouvert s'étendant tangentiellement à l'ouverture de passage (8) de la douille d'adaptation (7) sont formés de manière sécante sur la collerette annulaire (15), la collerette annulaire (15) étant interrompue par les saillies d'actionnement (16), et les saillies d'actionnement (16) présentant respectivement une saillie (18) s'étendant parallèlement à l'axe médian longitudinal (X-X) à l'extérieur de la rainure de guidage (19) respective, inclinée en sens inverse du sens d'enfichage (Z), de sorte qu'une ouverture d'enfichage appropriée à l'introduction d'un outil de desserrage (20) soit formée entre les saillies (18) et les rainures de guidage (19).

11. Connecteur enfichable (1) selon l'une des revendications 7 à 10,
**caractérisé en ce que** la collerette annulaire (15a) est séparée de la douille d'adaptation (7) par des parties d'interstice périphériques entre les bras d'encliquetage (10) et entoure les bras d'encliquetage (10) dans la région des premières cames d'encliquetage (12) sur leur côté extérieur et est connectée à ceux-ci dans cette région, et la collerette annulaire (15a) présente des parties de déformation (33) centralement entre les bras d'encliquetage (10), lesquelles parties de déformation sont déformables sous l'effet d'une force orientée radialement par rapport à l'axe médian longitudinal (X-X), de telle sorte qu'un écartement, orienté radialement vers l'extérieur, des bras d'encliquetage (10) soit produit de telle sorte que les premières cames d'encliquetage (12) adoptent leur position de desserrement.

12. Connecteur enfichable (1) selon la revendication 10, **caractérisé en ce que** la distance radiale des saillies (18) inclinées des saillies d'actionnement (16) sur leurs surfaces extérieures est égale à un diamètre extérieur de la collerette annulaire (15).

13. Connecteur enfichable (1) selon la revendication 12, **caractérisé en ce qu'**un diamètre extérieur de la collerette annulaire (15a) dans la région des premières cames d'encliquetage (12) est égal au diamètre extérieur de la partie de manchon (3).

14. Connecteur enfichable (1) selon l'une des revendications 1 à 13,
**caractérisé en ce qu'**un joint périphérique (26) est disposé avant la douille d'adaptation (7) dans le sens d'enfichage (Z) dans l'ouverture de passage (8) de la partie de manchon (3), pour réaliser l'étanchéité d'un interstice périphérique entre une paroi intérieure de la partie de manchon (3) et la tige de connecteur (23) d'un connecteur enfichable conjugué (14).

15. Connecteur enfichable (1) selon l'une des revendications 1 à 14,
**caractérisé en ce qu'**une sécurité contre le desserrage (60) est disposée de manière mobile dans la direction longitudinale (X-X) entre deux positions d'encliquetage à la périphérie extérieure de la partie de manchon (3), la sécurité contre le desserrage (60) empêchant un écartement des bras d'encliquetage (10) dans sa deuxième position d'encliquetage déplacée vers la collerette annulaire (15) et, dans son autre position d'encliquetage, les bras d'encliquetage (10) pouvant être écartés.

16. Connecteur enfichable (1) selon la revendication 15, **caractérisé en ce que** la sécurité contre le desserrage (60) est constituée d'une douille (61) entourant la partie de manchon (3), laquelle douille présente des languettes d'encliquetage (63) au niveau de son bord périphérique (62) orienté dans le sens d'enfichage (Z), lesquelles languettes s'encliquettent dans la position d'encliquetage respective dans des évidement (65) de la paroi périphérique de la partie de manchon (3).

17. Connecteur enfichable (1) selon la revendication 16, **caractérisé en ce que** la douille (61) entoure la collerette annulaire (15) ainsi que les saillies (18) dans sa position d'encliquetage bloquant l'écartement des bras d'encliquetage (10).

18. Connecteur enfichable (1) selon l'une des revendications 14 à 17, **caractérisé en ce qu'**un épaulement annulaire (27) servant à l'appui du joint périphérique (26) servant à réaliser l'étanchéité des interstices périphériques est formé dans la partie de manchon (3) à la transition d'une partie de canal (6), de diamètre élargi, de la partie de manchon (3) vers le canal de passage (5), et le joint périphérique (26) est encastré entre l'épaulement annulaire (27) et une surface d'extrémité frontale de la douille d'adaptation (7).

19. Connecteur enfichable (1) selon l'une des revendications 1 à 18,
**caractérisé en ce que** le boîtier (2) présente, à son extrémité opposée à la partie de manchon (3), un tenon de raccordement (37) qui possède à son extrémité libre un joint périphérique (39) et, au niveau de la région du tenon de raccordement (37) opposée à l'extrémité libre, sont disposées plusieurs nervures d'encliquetage (40) s'étendant en direction de l'extrémité libre, parallèlement à l'axe médian longitudinal (Y-Y), lesquelles nervures possèdent à leurs extrémités des rallonges d'encliquetage (41) orientées vers l'intérieur radialement par rapport à l'axe médian longitudinal (Y-Y) .

20. Connecteur enfichable (1) selon la revendication 19, **caractérisé en ce qu'**un interstice de guidage est formé entre les nervures d'encliquetage (40) et le tenon de raccordement (37), interstice de guidage dans lequel une douille de raccordement (42) peut être insérée, laquelle possède un alésage de passage pour la réception du tenon de raccordement (37), et présente un insert annulaire faisant saillie radialement vers l'extérieur par rapport à l'axe médian longitudinal (Y-Y), lequel insert annulaire, dans l'état enfilé de la douille de raccordement (42), peut être déplacé à l'intérieur de l'interstice de guidage entre les rallonges d'encliquetage (41) et l'extrémité opposée des nervures d'encliquetage (40).

21. Connecteur enfichable (1) selon l'une des revendications 1 à 20,
**caractérisé en ce qu'**un étage annulaire (9b) est formé par une réduction de diamètre de la douille d'adaptation (7) à l'extrémité avant de la douille d'adaptation (7) dans le sens d'enfichage (Z), et des rainures de guidage (9c) s'étendant à partir de cet étage annulaire (9b) à la périphérie de la douille d'adaptation (7) parallèlement à l'axe médian longitudinal (X-X) sont formées, dont le fond de rainure se situe sur le même rayon que la périphérie de l'étage annulaire (9b), les rainures de guidage (9c) servant à la réception et au guidage de nervures de guidage (9e) dans l'état enfiché de la douille d'adaptation (7), lesquelles nervures de guidage sont formées sur l'intérieur de la partie de canal (6) sur sa paroi intérieure.

22. Connecteur enfichable (1) selon la revendication 21, **caractérisé en ce que** l'étage annulaire (9b) de la douille d'adaptation (7) présente une surface d'appui (27a) périphérique s'étendant radialement par rapport à l'axe médian longitudinal (X-X), et la partie (6a) de la partie de canal (6) possède une surface de butée annulaire (27b) formée au sens d'une augmentation de diamètre, et dans l'état enfiché de la douille d'adaptation (7), celle-ci s'appuyant par sa surface d'appui (27a) contre la surface de butée (27b).

23. Raccord enfichable, constitué d'un connecteur enfichable (1) selon l'une des revendications 1 à 22 ainsi que d'un connecteur enfichable conjugué (14) destiné à être enfiché dans le connecteur enfichable (1) avec une tige de connecteur (23) et d'une rainure d'encliquetage (13) formée derrière la tige de connecteur (23) dans le sens d'enfichage (Z),
**caractérisé en ce que** la tige de connecteur (23) est dimensionnée de telle sorte que, dans l'état enfiché, son extrémité libre dépasse de la douille d'adaptation (7) et se termine dans le canal de passage (5) du boîtier (2) du connecteur enfichable (1) et que son diamètre extérieur soit supérieur à la distance radiale entre les premières cames d'encliquetage (12) dans l'état non écarté.

24. Raccord enfichable selon la revendication 23, **caractérisé en ce que** la rainure d'encliquetage (13) est disposée et formée de telle sorte que, dans l'état enfiché de la tige de connecteur (23), les bras de retenue (10) s'encliquètent par complémentarité de formes dans la rainure d'encliquetage (13) par leurs premières cames d'encliquetage (12).

25. Raccord enfichable selon la revendication 23 ou 24, **caractérisé en ce que** la rainure d'encliquetage (13) présente une étendue axiale dans la direction du sens d'enfichage (Z) telle qu'un déplacement axial de la tige de connecteur (23) dans l'état enfiché dans la douille d'adaptation (7) sur un trajet de déplacement soit défini, et la longueur de la tige de connecteur (23) entre la rainure d'encliquetage (13) et son extrémité libre étant dimensionnée de telle sorte que la tige de connecteur (23) soit prolongée de la longueur du trajet de déplacement axial.
